# EUROPEAN PATENT APPLICATION

(11) **EP 4 672 817 A1**
(43) Date of publication of application: **31.12.2025**
(21) Application number: 23933465.9
(22) Date of filing: 20.04.2023
(51) Int. Cl.: H04W 36/00

(54) **COMMUNICATION METHOD AND APPARATUS**

(71) Applicant: Huawei Digital Power Technologies Co., Ltd., Shenzhen, Guangdong 518129 (CN)
(72) Inventor: YANG, Lu, Shenzhen, Guangdong 518129 (CN); WANG, Wenhui, Shenzhen, Guangdong 518129 (CN); SUN, Li, Shenzhen, Guangdong 518129 (CN)
(74) Representative: Pfenning, Meinig & Partner mbB
(86) International application number: PCT/CN2023/089536
(87) International publication number: WO 2024/216589

(57) **Abstract**

This application provides a communication method and an apparatus. A terminal device needs to be handed over only between different clusters during movement, which can reduce a quantity of handovers of the terminal device, and improve its communication experience. The method includes: A first access network device included in a source cluster currently accessed by a terminal device obtains first information, where the first information includes identification information corresponding to at least one candidate access network apparatus included in each of a plurality of candidate clusters. The first access network device obtains first measurement report information that indicates channel quality. The first access network device sends a handover request message for requesting to hand over the terminal device from the source cluster to a target cluster, where the target cluster is determined from the plurality of candidate clusters based on the first information and the first measurement report information.

## Description

### TECHNICAL FIELD

This application relates to the communication field, and more specifically, to a communication method and an apparatus.

### BACKGROUND

In handover (handover) technologies, as a terminal device moves, the terminal device needs to be handed over from one cell to another cell. In high-density deployment network scenarios, because there are a large quantity and high density of base stations, movement of the terminal device trigger frequent handover procedures. If the terminal device is handed over frequently, this can lead to an increased handover failure rate, a greater service interruption risk, increased signaling overheads, and a waste of bandwidth, ultimately degrading communication experience of the terminal device.

### SUMMARY

This application provides a communication method and an apparatus, to reduce a quantity of handovers of a terminal device, thereby improving communication experience of the terminal device.

According to a first aspect, a communication method is provided. The method may be performed by a first communication apparatus. The method includes: The first communication apparatus obtains first information, where the first information includes identification information corresponding to at least one candidate access network apparatus included in each of a plurality of candidate clusters, and the first communication apparatus is an access network device included in a source cluster currently accessed by a second communication apparatus. The first communication apparatus obtains first measurement report information. The first communication apparatus sends a handover request message, where the handover request message is used to request to hand over the second communication apparatus from the source cluster to a target cluster, the target cluster is determined based on the first information and the first measurement report information, and the plurality of candidate clusters include the target cluster. The first communication apparatus may be a first access network device, or a chip or a chip system in the first access network device, or an apparatus that is used in conjunction with the first access network device. The second communication apparatus may be a terminal device, or a chip or a chip system in the terminal device, or an apparatus that is used in conjunction with the terminal device.

Based on the foregoing technical solution, the first access network device in the source cluster currently accessed by the terminal device may obtain the identification information (the first information) corresponding to the at least one candidate access network apparatus included in each of the plurality of candidate clusters. The first access network device determines, based on the obtained first measurement report information and the obtained first information, to hand over the terminal device from the source cluster to the target cluster. The first access network device initiates, by sending the handover request message, a handover procedure of handing over the terminal device from the source cluster to the target cluster. A plurality of access network devices in a cluster (source cluster/target cluster) may jointly serve the terminal device. The terminal device needs to be handed over only between different clusters in a movement process. Therefore, a quantity of handovers of the terminal device can be reduced, so that communication experience of the terminal device is improved.

In some implementations of the first aspect, that the first communication apparatus obtains the first information includes: The first communication apparatus receives the first information from a third communication apparatus. The third communication apparatus may be a first controller, or a chip or a chip system in the first controller.

In some implementations of the first aspect, the first measurement report information indicates channel quality of the at least one candidate access network apparatus included in each of the plurality of candidate clusters.

In some implementations of the first aspect, the method further includes: The first communication apparatus sends second information to the second communication apparatus, where the second information includes the identification information corresponding to the at least one candidate access network apparatus included in each of the plurality of candidate clusters. That the first communication apparatus obtains the first measurement report information includes: The first communication apparatus receives the first measurement report information from the second communication apparatus. The first measurement report information may be determined by the second communication apparatus through measuring a downlink reference signal.

In some implementations of the first aspect, the method further includes: The first communication apparatus obtains second measurement report information, where the second measurement report information indicates channel quality of the access network device included in the source cluster. The first communication apparatus sends a first request message to the third communication apparatus based on the second measurement report information, where the first request message is used to obtain the first information.

In some implementations of the first aspect, that the first communication apparatus obtains the second measurement report information includes: The first communication apparatus receives the second measurement report information from the second communication apparatus. The second measurement report information may be determined by the second communication apparatus through measuring a downlink reference signal.

In some implementations of the first aspect, the first information further includes priority information of the plurality of candidate clusters, and the target cluster is a candidate cluster whose priority is greater than or equal to a preset threshold in the plurality of candidate clusters. The first measurement report information indicates channel quality of the access network device included in the source cluster. A candidate cluster with a higher priority has better performance.

Based on the foregoing solution, the first information further includes the priority information of the plurality of candidate clusters. In this case, the first communication apparatus may determine the target cluster from the plurality of candidate clusters based on the first measurement report information and the priority information of the plurality of candidate clusters. In addition, performance of the target cluster is in direct proportion to a priority of the target cluster, and the priority of the determined target cluster is greater than or equal to the preset threshold, which indicates that the performance of the target cluster is good, so that communication experience of a terminal device that accesses the target cluster can be improved.

In some implementations of the first aspect, that the first communication apparatus sends the handover request message includes: The first communication apparatus sends the handover request message to a fourth communication apparatus, where the fourth communication apparatus is a candidate access network device included in the target cluster. The fourth communication apparatus may be a second access network device, or a chip or a chip system in the second access network device. In this case, the third communication apparatus (the first controller) is connected to the access network device included in the source cluster and the candidate access network device included in the plurality of candidate clusters.

The first information may further indicate identification information corresponding to a candidate access network device with a highest priority in the at least one candidate access network apparatus included in the candidate cluster. The second access network device is a candidate access network device with a highest priority in the plurality of candidate access network devices included in the target cluster.

In some implementations of the first aspect, that the first communication apparatus sends the handover request message includes: The first communication apparatus sends the handover request message to the third communication apparatus. In this case, the third communication apparatus (the first controller) is connected to the access network device included in the source cluster, and a fifth communication apparatus (a second controller) is connected to the candidate access network device included in the plurality of candidate clusters.

In some implementations of the first aspect, the candidate cluster satisfies at least one of the following: average frequency efficiency of the at least one candidate access network apparatus included in the candidate cluster is greater than or equal to a first threshold; an average throughput of the at least one candidate access network apparatus included in the candidate cluster is greater than or equal to a second threshold; or an average communication rate of the at least one candidate access network apparatus included in the candidate cluster is greater than or equal to a third threshold. Performance of the candidate cluster satisfies a specific condition, so that communication experience of a terminal device that accesses the candidate cluster can be improved.

In some implementations of the first aspect, the source cluster satisfies at least one of the following: channel quality of at least one access network device included in the source cluster is greater than or equal to the first threshold; a throughput of the at least one access network device included in the source cluster is greater than or equal to the second threshold; or an average communication rate of the at least one access network device included in the source cluster is greater than or equal to the third threshold. Performance of the source cluster satisfies a specific condition, so that communication experience of a terminal device that accesses the source cluster can be improved.

According to a second aspect, a communication method is provided. The method may be performed by a third communication apparatus. The method includes: The third communication apparatus determines first information, where the first information includes identification information corresponding to at least one candidate access network apparatus included in each of a plurality of candidate clusters. The third communication apparatus sends the first information to a first communication apparatus, where the first communication apparatus is an access network device included in a source cluster currently accessed by a second communication apparatus. The first communication apparatus may be a first access network device, or a chip or a chip system in the first access network device, or an apparatus that is used in conjunction with the first access network device. The second communication apparatus may be a terminal device, or a chip or a chip system in the terminal device, or an apparatus that is used in conjunction with the terminal device. The third communication apparatus may be a first controller, or a chip or a chip system in the first controller, or an apparatus that is used in conjunction with the first controller.

The method provided in the second aspect is a method on a third communication apparatus side corresponding to the first aspect. For beneficial effects of the method, directly refer to the first aspect.

In some implementations of the second aspect, that the third communication apparatus determines the first information includes: The third communication apparatus determines the first information based on channel quality information of a plurality of candidate access network devices.

In some implementations of the second aspect, the method further includes: The third communication apparatus receives a first request message from the first communication apparatus, where the first request message is used to obtain the first information.

In some implementations of the second aspect, the first information further includes priority information of the plurality of candidate clusters.

In some implementations of the second aspect, the method further includes: The third communication apparatus sends a second request message to a fifth communication apparatus, where the second request message is used to obtain channel quality information of the plurality of candidate access network devices. The third communication apparatus receives the channel quality information of the plurality of candidate access network devices from the fifth communication apparatus. The fifth communication apparatus may be a second controller, a chip or a chip system in the second controller, or an apparatus that is used in conjunction with the second controller.

In some implementations of the second aspect, the method further includes: The third communication apparatus receives a handover request message from the first communication apparatus, where the handover request message is used to request to hand over the second communication apparatus from the source cluster to a target cluster, and the plurality of candidate clusters include the target cluster. The third communication apparatus sends a context setup request message of the second communication apparatus to the fifth communication apparatus. The third communication apparatus receives a context setup request acknowledgment message of the second communication apparatus from the fifth communication apparatus.

According to a third aspect, a communication method is provided. The method may be performed by a second communication apparatus. The method includes: The second communication apparatus receives second information from a first communication apparatus, where the second information includes identification information corresponding to at least one candidate access network apparatus included in each of a plurality of candidate clusters, and the first communication apparatus is an access network device included in a source cluster currently accessed by the second communication apparatus. The second communication apparatus sends first measurement report information to the first communication apparatus, where the first measurement report information indicates channel quality of the at least one candidate access network apparatus included in each of the plurality of candidate clusters. The first communication apparatus may be a first access network device, or a chip or a chip system in the first access network device, or an apparatus that is used in conjunction with the first access network device. The second communication apparatus may be a terminal device, or a chip or a chip system in the terminal device, or an apparatus that is used in conjunction with the terminal device.

The method provided in the third aspect is a method on a second communication apparatus side corresponding to the first aspect. For beneficial effects of the method, directly refer to the first aspect.

In some implementations of the third aspect, the method further includes: The second communication apparatus sends second measurement report information to the first communication apparatus, where the second measurement report information indicates channel quality of the access network device included in the source cluster.

According to a fourth aspect, a communication method is provided. The method may be performed by a second communication apparatus. The method includes: The second communication apparatus sends first measurement report information to a first communication apparatus, where the first measurement report information indicates channel quality of an access network device included in a source cluster currently accessed by the second communication apparatus, and the first communication apparatus is the access network device included in the source cluster. The first communication apparatus may be a first access network device, or a chip or a chip system in the first access network device, or an apparatus that is used in conjunction with the first access network device. The second communication apparatus may be a terminal device, or a chip or a chip system in the terminal device, or an apparatus that is used in conjunction with the terminal device.

The method provided in the fourth aspect is a method on a second communication apparatus side corresponding to the first aspect. For beneficial effects of the method, directly refer to the first aspect.

In some implementations of the fourth aspect, the source cluster satisfies at least one of the following: channel quality of at least one access network device included in the source cluster is greater than or equal to a first threshold; a throughput of the at least one access network device included in the source cluster is greater than or equal to a second threshold; or an average communication rate of the at least one access network device included in the source cluster is greater than or equal to a third threshold.

According to a fifth aspect, a communication method is provided. The method includes: A first access network device obtains first information, where the first information includes identification information corresponding to at least one candidate access network apparatus included in each of a plurality of candidate clusters, and the first access network device is an access network device included in a source cluster currently accessed by a terminal device. The first access network device obtains first measurement report information. The first access network device sends a handover request message, where the handover request message is used to request to hand over the terminal device from the source cluster to a target cluster, the target cluster is determined based on the first information and the first measurement report information, and the plurality of candidate clusters include the target cluster.

Based on the foregoing technical solution, the first access network device in the source cluster currently accessed by the terminal device may obtain the identification information (the first information) corresponding to the at least one candidate access network apparatus included in each of the plurality of candidate clusters/list information of the plurality of candidate clusters. The first access network device determines, based on the obtained first measurement report information and the obtained first information, to hand over the terminal device from the source cluster to the target cluster. The first access network device initiates, by sending the handover request message, a handover procedure of handing over the terminal device from the source cluster to the target cluster. A plurality of access network devices in a cluster (source cluster/target cluster) may jointly serve the terminal device. The terminal device needs to be handed over only between different clusters in a movement process. Therefore, a quantity of handovers of the terminal device can be reduced, so that communication experience of the terminal device is improved.

In some implementations of the fifth aspect, that the first access network device obtains the first information includes: A first controller determines the first information. The first controller sends the first information to the first access network device. The first access network device receives the first information from the first controller.

In some implementations of the fifth aspect, that the first controller determines the first information includes: The first controller determines the first information based on channel quality information of a plurality of candidate access network devices.

In some implementations of the fifth aspect, the first measurement report information indicates channel quality of the at least one candidate access network apparatus included in each of the plurality of candidate clusters.

In some implementations of the fifth aspect, the method further includes: The first access network device sends second information to the terminal device, where the second information includes the identification information corresponding to the at least one candidate access network apparatus included in each of the plurality of candidate clusters. That the first access network device obtains the first measurement report information includes: The first access network device receives the first measurement report information from the terminal device.

In some implementations of the fifth aspect, the method further includes: The first access network device obtains second measurement report information, where the second measurement report information indicates channel quality of the access network device included in the source cluster. The first access network device sends a first request message to the first controller based on the second measurement report information, where the first request message is used to obtain the first information. The first controller receives the first request message from the first access network device.

In some implementations of the fifth aspect, that the first access network device obtains the second measurement report information includes: The first access network device receives the second measurement report information from the terminal device.

In some implementations of the fifth aspect, the first information further includes priority information of the plurality of candidate clusters, and the target cluster is a candidate cluster whose priority is greater than or equal to a preset threshold in the plurality of candidate clusters. The first measurement report information indicates channel quality of the access network device included in the source cluster.

In some implementations of the fifth aspect, that the first access network device sends the handover request message includes: The first access network device sends the handover request message to a second access network device, where the second access network device is a candidate access network device included in the target cluster.

In some implementations of the fifth aspect, that the first access network device sends the handover request message includes: The first access network device sends the handover request message to the first controller. The first controller receives the handover request message from the first access network device. The first controller sends a context setup request message of the terminal device to a second controller. The first controller receives a context setup request acknowledgment message of the terminal device from the second controller.

In some implementations of the fifth aspect, the method further includes: The first controller sends a second request message to the second controller, where the second request message is used to obtain the channel quality information of the plurality of candidate access network devices. The first controller receives the channel quality information of the plurality of candidate access network devices from the second controller.

In some implementations of the fifth aspect, the candidate cluster satisfies at least one of the following: average frequency efficiency of the at least one candidate access network apparatus included in the candidate cluster is greater than or equal to a first threshold; an average throughput of the at least one candidate access network apparatus included in the candidate cluster is greater than or equal to a second threshold; or an average communication rate of the at least one candidate access network apparatus included in the candidate cluster is greater than or equal to a third threshold.

In some implementations of the fifth aspect, the source cluster satisfies at least one of the following: channel quality of at least one access network device included in the source cluster is greater than or equal to the first threshold; a throughput of the at least one access network device included in the source cluster is greater than or equal to the second threshold; or an average communication rate of the at least one access network device included in the source cluster is greater than or equal to the third threshold.

According to a sixth aspect, a communication apparatus is provided. The apparatus may be used in the first communication apparatus according to the first aspect. The apparatus includes: an obtaining unit, configured to implement an obtaining function in the method according to the first aspect; and a transceiver unit, configured to implement receiving and sending functions in the method according to the first aspect.

According to a seventh aspect, a communication apparatus is provided. The apparatus may be used in the third communication apparatus according to the second aspect. The apparatus includes: a processing unit, configured to implement a processing function, for example, determining first information, in the method according to the second aspect; and a transceiver unit, configured to implement receiving and sending functions in the method according to the second aspect.

According to an eighth aspect, a communication apparatus is provided. The apparatus may be used in the second communication apparatus according to the third aspect. The apparatus includes a transceiver unit, configured to implement receiving and sending functions in the method according to the third aspect.

According to a ninth aspect, a communication apparatus is provided. The apparatus may be used in the second communication apparatus according to the fourth aspect. The apparatus includes a transceiver unit, configured to implement a sending function in the method according to the third aspect.

According to a tenth aspect, a communication apparatus is provided, including a processor and a memory. The memory is configured to store a computer program, and the processor is configured to execute the computer program stored in the memory, so that the communication apparatus performs the method according to any one of the first aspect to the fourth aspect or the possible implementations of the first aspect to the fourth aspect.

According to an eleventh aspect, a communication apparatus is provided, including an input/output interface and a logic circuit. The input/output interface is configured to obtain input information and/or output information. The logic circuit is configured to: perform the method according to any one of the first aspect to the fourth aspect or the possible implementations of the first aspect to the fourth aspect, and process and/or generate the output information based on the input information.

According to a twelfth aspect, a communication system is provided, including a first communication apparatus, a second communication apparatus, and a third communication apparatus. The first communication apparatus is configured to implement the method according to any one of the first aspect or the possible implementations of the first aspect, the second communication apparatus is configured to implement the method according to any one of the third aspect and the fourth aspect or the possible implementations of the third aspect and the fourth aspect, and the third communication apparatus is configured to implement the method according to any one of the second aspect or the possible implementations of the second aspect.

According to a thirteenth aspect, a communication system is provided, including a first communication apparatus and a third communication apparatus. The first communication apparatus is configured to implement the method according to any one of the first aspect or the possible implementations of the first aspect, and the third communication apparatus is configured to implement the method according to any one of the second aspect or the possible implementations of the second aspect.

According to a fourteenth aspect, a communication system is provided, including a terminal device, a first access network device, and a first controller. The terminal device, the first access network device, and the first controller are configured to implement the method according to any one of the fifth aspect or the possible implementations of the fifth aspect.

According to a fifteenth aspect, a computer-readable storage medium is provided. The computer-readable medium stores a computer program. When the computer program runs on a computer, the computer is enabled to perform the method according to the first aspect to the fourth aspect or any possible implementation of the first aspect to the fourth aspect.

According to a sixteenth aspect, a computer program product including instructions is provided. When the instructions are executed by a computer, a communication apparatus is enabled to implement the method according to the first aspect to the fourth aspect or any possible implementation of the first aspect to the fourth aspect.

The solutions provided in the sixth aspect to the sixteenth aspect are used to implement or cooperatively implement the methods provided in the first aspect to the fifth aspect, and therefore can achieve beneficial effects the same as or corresponding to those achieved by the first aspect to the fifth aspect. Details are not described herein again.

### BRIEF DESCRIPTION OF DRAWINGS

FIG. 1 is a diagram of an architecture of a communication system to which an embodiment of this application is applied;
FIG. 2 shows a basic procedure in which a terminal device is handed over in a standalone networking scenario;
FIG. 3 is a schematic flowchart of interaction of conventional cell handover;
FIG. 4 is a diagram of a relationship between a controller, an access network device, and a terminal device according to an embodiment of this application;
FIG. 5 is a schematic flowchart of a communication method according to an embodiment of this application;
FIG. 6 is a schematic flowchart of interaction of a communication method according to an embodiment of this application;
FIG. 7 is a diagram of a movement scenario of a terminal device based on candidate clusters in a same controller;
FIG. 8 is a diagram of a plurality of candidate clusters determined by a first controller;
FIG. 9 is another schematic flowchart of interaction of a communication method according to an embodiment of this application;
FIG. 10 is another schematic flowchart of interaction of a communication method according to an embodiment of this application;
FIG. 11 is a diagram of a movement scenario of a terminal device based on candidate clusters in different controllers;
FIG. 12 is another schematic flowchart of interaction of a communication method according to an embodiment of this application;
FIG. 13 is another schematic flowchart of interaction of a communication method according to an embodiment of this application;
FIG. 14 is a block diagram of a communication apparatus according to an embodiment of this application;
FIG. 15 is a block diagram of another communication apparatus according to an embodiment of this application;
FIG. 16 is a block diagram of another communication apparatus according to an embodiment of this application;
FIG. 17 is a block diagram of another communication apparatus according to an embodiment of this application; and
FIG. 18 is a block diagram of another communication apparatus according to an embodiment of this application.

### DESCRIPTION OF EMBODIMENTS

The following describes technical solutions of this application with reference to accompanying drawings.

Embodiments of this application may be applied to various communication systems, for example, 4th generation (4th generation, 4G) communication systems such as a wireless local area network (wireless local area network, WLAN) system, a narrowband internet of things (narrowband internet of things, NB-IoT) system, and a long term evolution (long term evolution, LTE) system, 5th generation (5th generation, 5G) communication systems such as a satellite communication system, a sidelink (sidelink, SL) communication system, and a new radio (new radio, NR) communication system, and a communication system evolved after 5G like a sixth generation (6th generation, 6G) communication system.

A terminal device in embodiments of this application may be a device having a wireless transceiver function, and may be specifically a subscriber unit (subscriber unit), user equipment (user equipment, UE), an access terminal, a cellular phone (cellular phone), a subscriber station, a mobile station (mobile station, MS), customer-premises equipment (customer-premises equipment, CPE), a remote station, a remote terminal, a mobile device, a user terminal, a wireless communication device, a user agent, or a user apparatus. The terminal device may alternatively be a satellite phone, a cellular phone, a smartphone, a wireless data card, a personal digital assistant (personal digital assistant, PDA) computer, a tablet computer, a wireless modulator demodulator (modulator demodulator, modem), a laptop computer (laptop computer), a machine type communication (machine type communication, MTC) device, a wireless terminal in self-driving (self-driving), or the like. The terminal device may alternatively be a cordless phone, a session initiation protocol (session initiation protocol, SIP) phone, a wireless local loop (wireless local loop, WLL) station, a personal digital assistant (personal digital assistant, PDA), a handheld device having a wireless communication function, a vehicle-mounted device, a wearable device, a computing device or another processing device connected to a wireless modulator demodulator, a communication device carried on a high-altitude aircraft, an uncrewed aerial vehicle, a robot, a smart point of sale (point of sale, POS) machine, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. The user equipment includes vehicle user equipment. As an internet of things (internet of things, IoT) technology emerges, a growing quantity of devices that previously do not have a communication function, for example, but not limited to, a household appliance, a transportation vehicle, a tool device, a service device, and a service facility, are configured with a wireless communication unit to obtain the wireless communication function. In this way, these devices can access a wireless communication network and accept remote control. Such devices have the wireless communication function because the devices are configured with the wireless communication unit, and therefore also belong to the scope of wireless communication devices. This is not limited in this application.

In embodiments of this application, an apparatus configured to implement a function of the terminal device may be a terminal device, or may be an apparatus that can support the terminal device in implementing the function, for example, a chip system. The apparatus may be mounted in the terminal device or used in conjunction with the terminal device. In embodiments of this application, the chip system may include a chip, or may include a chip and another discrete component.

For example, a network device is a device having a wireless transceiver function, and is configured to communicate with the terminal device, or may be a device that enables the terminal device to access a wireless network. The network device may be a node in a radio access network, and may also be referred to as a base station, or may be referred to as a radio access network (radio access network, RAN) node (or device). The network device may be an evolved NodeB (evolved NodeB, eNB or eNodeB) in LTE, a next generation NodeB (next generation NodeB, gNB) in a 5G network, a base station in a future evolved public land mobile network (public land mobile network, PLMN), a broadband network gateway (broadband network gateway, BNG), an aggregation switch or a non-3rd generation partnership project (3rd generation partnership project, 3GPP) access device, or the like. Optionally, the network device in embodiments of this application may include various forms of base stations, for example, a relay station, an access point, a device that implements a base station function in a communication system evolved after 5G, a mobile switching center, a home evolved NodeB (home evolved NodeB or home NodeB, HNB), a baseband unit (baseband unit, BBU), a device that undertakes a base station function in device-to-device (device-to-device, D2D) communication, an access point (access point, AP) in a wireless fidelity (wireless fidelity, Wi-Fi) system, a radio relay node, a wireless backhaul node, a transmission point (transmission point, TP) or a transmission reception point (transmission reception point, TRP), a device that undertakes a base station function in vehicle-to-everything (vehicle-to-everything, V2X) communication and machine-to-machine (machine-to-machine, M2M) communication; and may further include a central unit (central unit, CU) and a distributed unit (distributed unit, DU) in a cloud access network (cloud radio access network, C-RAN) system, and a network device in a non-terrestrial network (non-terrestrial network, NTN) communication system, that is, may be deployed on a high-altitude platform or a satellite. Alternatively, the network device may be a gNB or a transmission point in NR, one antenna panel or a group of antenna panels (including a plurality of antenna panels) of a base station in NR, or may be a network node that constitutes a gNB or a transmission point. Alternatively, the network device may be a vehicle-mounted device, a wearable device, or a network device in a 6G network, a network device in a future evolved PLMN network, or a network device deployed on a satellite. This is not limited in embodiments of this application. In addition, based on a size of a provided service coverage area, base stations may be classified into a macro base station configured to provide a macro cell (macro cell), a micro base station configured to provide a pico cell (pico cell), and a femto base station configured to provide a femto cell (femto cell). As a wireless communication technology continuously evolves, a future base station may also use another name.

The network device has abundant product forms. For example, in a product implementation process, the BBU and a radio frequency unit (radio frequency unit, RFU) may be integrated into a same device, and the device is connected to an antenna array through a cable (for example but not limited to a feeder). The BBU and the RFU may alternatively be disposed separately, are connected to each other through an optical fiber, and communicate with each other by using, for example but not limited to, a common public radio interface (common public radio interface, CPRI) protocol. In this case, the RFU is usually referred to as a remote radio unit (remote radio unit, RRU), and is connected to the antenna array through a cable. In addition, the RRU may alternatively be integrated with the antenna array. For example, an active antenna unit (active antenna unit, AAU) product uses this structure.

In addition, the BBU may be further decomposed into a plurality of parts. For example, the BBU may be further divided into a CU and a DU based on real-time performance of a processed service. The CU is responsible for processing non-real-time protocols and services, and the DU is responsible for processing physical layer protocols and real-time services. Further, some physical layer functions may be separated from the BBU or the DU and integrated into an AAU.

In another possible scenario, a plurality of network devices collaborate to assist the terminal in implementing radio access, and different network devices respectively implement some functions of the base station. For example, the network device may be a CU, a DU, a CU-control plane (control plane, CP), a CU-user plane (user plane, UP), a radio unit (radio unit, RU), or the like. The CU and the DU may be separately disposed, or may be included in a same network element, for example, a BBU. The RU may be included in a radio frequency device or a radio frequency unit, for example, included in an RRU, an AAU, or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network (core network, CN). This is not limited herein.

In different systems, the CU (or the CU-CP and the CU-UP), the DU, or the RU may also have different names, but a person skilled in the art may understand meanings thereof. For example, in an open radio access network (open RAN, ORAN) system, a CU may also be referred to as an O-CU (open CU), a DU may also be referred to as an O-DU, a CU-CP may also be referred to as an O-CU-CP, a CU-UP may also be referred to as an O-CU-UP, and an RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The network device may communicatively interact with a core network device, to provide a communication service for the terminal device. The core network device is, for example, a device in a core network of a 5G network. As a bearer network, the core network provides an interface for connecting to a data network, provides communication connection, authentication, management, and policy control for a terminal, carries a data service, and the like.

In embodiments of this application, an apparatus configured to implement a function of the network device may be a network device, or may be an apparatus that can support the network device in implementing the function, for example, a chip system. The apparatus may be mounted in the network device or used in conjunction with the network device.

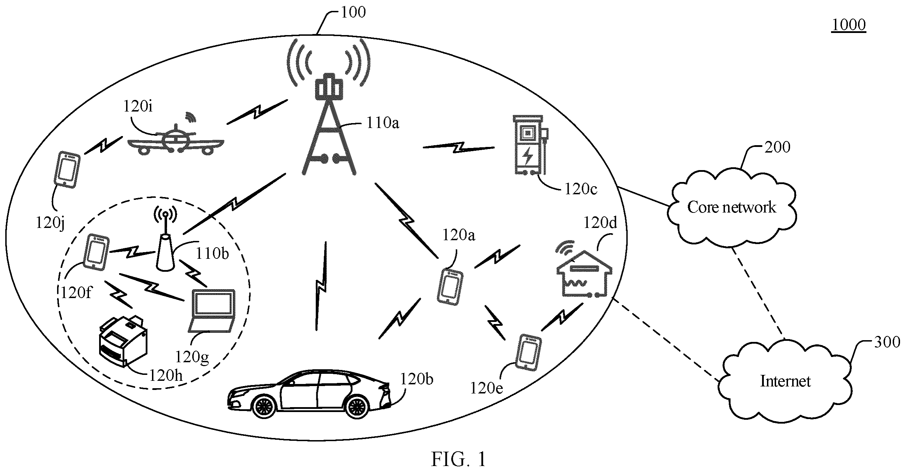

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal device (for example, 120a to 120j in FIG. 1). The terminal device is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminal devices may be connected to each other in a wired or wireless manner, and radio access network devices may be connected to each other in a wired or wireless manner. FIG. 1 is merely a diagram. The communication system may further include another network device, for example, may further include a wireless relay device and a wireless backhaul device, which are not shown in FIG. 1. In embodiments of this application, the "radio access network device" may be referred to as "access network device" for short.

The following explains and describes some terms and concepts in embodiments of this application.

Handover: is a process in which a mobile terminal moves from a coverage area of a base station to a coverage area of another base station during a call.

To facilitate understanding of embodiments of this application, the following briefly describes technical solutions related to embodiments of this application.

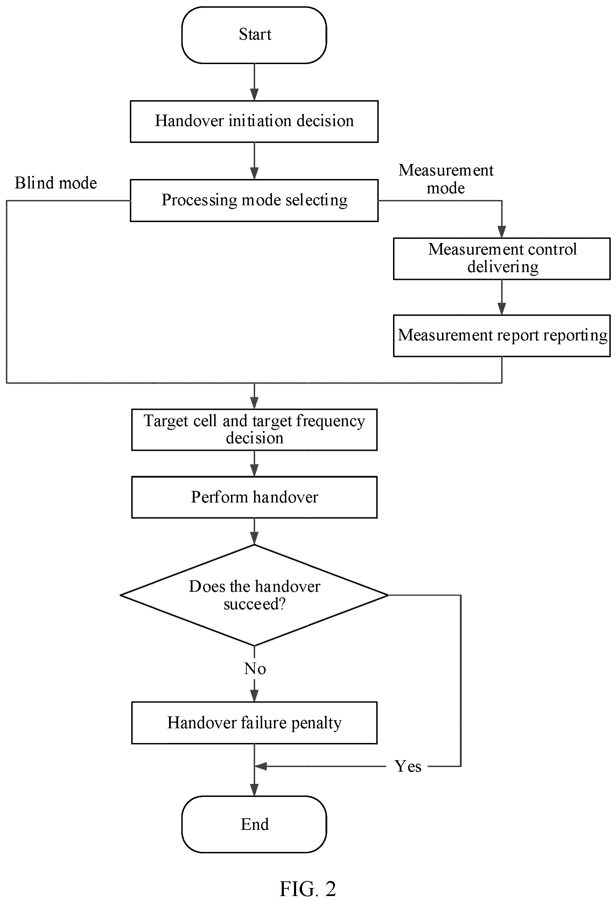

FIG. 2 shows a basic procedure in which a terminal device is handed over in a standalone networking scenario. After handover initiation decision is approved, an access network device selects a corresponding processing mode based on signal quality of a serving cell and related events, and determines whether the terminal device needs to measure signal quality of a candidate target cell before handover. The processing mode is classified into a measurement mode and a blind mode. In the measurement mode, after the access network device delivers measurement control to the terminal device, the terminal device measures the signal quality of the candidate target cell, and reports a measurement report to the access network device. The access network device decides a target cell or a target frequency based on the measurement report, and indicates handover of the terminal device to be performed. If the terminal device fails to be handed over, a handover failure penalty is performed, and the access network device selects another target cell and indicates handover of the terminal device to be performed. In the blind mode, the terminal device does not need to measure the signal quality of the candidate target cell before handover, and the access network device directly decides a target cell or a target frequency, and indicates handover of the terminal device to be performed.
(1) Measurement mode is a process in which the access network device indicates the terminal device to measure and report the signal quality of the candidate target cell based on information delivered through measurement control, and the access network device generates a target cell list based on a measurement report reported by the terminal device.
(2) Blind mode is a process in which the access network device does not indicate the terminal device to measure the signal quality of the candidate target cell, and directly generates a target cell list or a target frequency list based on a related priority parameter.

In a high-frequency scenario, the blind mode is used more widely. This is because in the high-frequency scenario, a millimeter wave has a high frequency and a short wavelength, signal transmission attenuation is fast, and a coverage area is limited. In a scenario in which a user moves at a high speed, if the measurement mode is used, the terminal device may have moved out of a source cell before the signal quality of the target cell or signal quality of the frequency is measured, and then a call drop rate increases. In this case, the blind mode can be used to enable handover of the terminal device to be quickly completed. However, a blind mode scenario has a high requirement on neighboring cell planning. If the neighboring cell planning is incomplete, access of the terminal device may fail.

Measurement control delivering is a process in which the access network device delivers measurement configuration information to the terminal device. The access network device is triggered to deliver the measurement configuration information to the terminal device in the following scenarios: (1) When the terminal device enters a connected state, the access network device delivers the measurement configuration information to the terminal device by using a radio resource control (radio resource control, RRC) reconfiguration (RRC Reconfiguration) message. (2) After the terminal device is in a connected state or handover is completed, if the measurement configuration information is updated, the access network device also delivers the updated measurement configuration information to the terminal device by using the RRC reconfiguration message.

The measurement configuration information is configured by the access network device, and is delivered to the terminal device. The measurement configuration information mainly includes the following information:
(1) Measurement object: includes an attribute like a measurement system, a measurement frequency, or a measurement cell; and indicates a specific cell or frequency on which the terminal device performs signal quality measurement. The measurement cell may be a serving cell or a neighboring cell.
(2) Report configurations: include attributes such as measurement event information and a trigger quantity for event reporting; and indicate a condition for the terminal device to report a measurement report and a standard for reporting the measurement report.
(3) Other configurations: include attributes such as a measurement synchronization signal and physical broadcast channel (physical broadcast channel, PBCH) block (synchronization signal and PBCH block, SSB) measurement timing configuration (SSB measurement timing configuration, SMTC), a measurement gap (gap), and measurement filtering; and indicate duration, a gap, and the like for performing measurement by the terminal device.

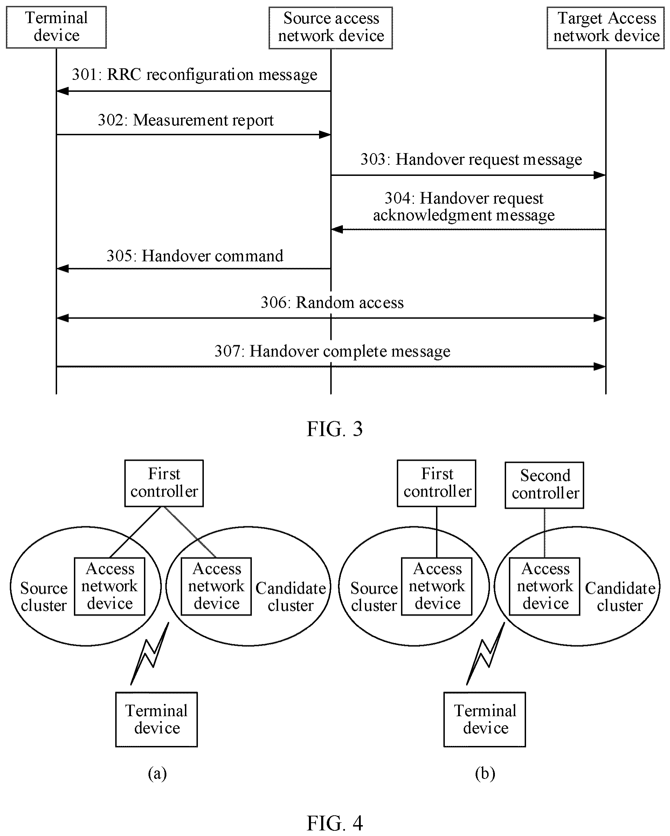

FIG. 3 is a schematic flowchart of interaction of conventional cell handover. Specific steps are as follows.

301: A source access network device sends an RRC reconfiguration message to a terminal device in a connected state, where the RRC reconfiguration message is used by the terminal device to measure signal strength of a current serving cell and another cell, and the RRC reconfiguration message includes parameters such as a measurement object, a report configuration, and a measurement identifier.

302: The terminal device receives the RRC reconfiguration message from the source access network device, and after performing cell measurement based on the RRC reconfiguration message, the terminal device generates a measurement report and reports the measurement report to the currently connected source access network device, where the measurement report includes the signal strength of the current serving cell and the signal strength of the another cell that are obtained by the terminal device through measurement.

303: The source access network device determines, based on the measurement report reported by the terminal device, whether the terminal device needs to perform cell handover; and if the source access network device determines that the terminal device needs to perform cell handover, the source access network device sends a handover request message to a target access network device.

304: The target access network device receives the handover request message from the source access network device, and determines, based on a status like a quantity of terminal devices connected to the target access network device, whether to allow access of the terminal device; and if access of the terminal device is allowed, the target access network device sends a handover request acknowledgment message to the source access network device, where the handover request acknowledgment message includes parameters such as a cell radio network temporary identifier (cell radio network temporary identifier, C-RNTI) allocated to the terminal device and a security-related algorithm of the target access network device.

305: The source access network device receives the handover request acknowledgment message from the target access network device, and sends a handover command to the terminal device, where the handover command includes the parameters in the handover request acknowledgment message. This is equivalent to that the source access network device performs transparent transmission. Specifically, the handover command includes related information of a target cell and a related configuration parameter needed for accessing the target cell by the terminal device. For example, the handover command includes a PCI of the target cell, frequency information of the target cell (a frequency of the target cell), a C-RNTI allocated by the target cell to the terminal device, a random access channel (random access channel, RACH) resource needed for accessing the target cell, and other information.

306: The terminal device receives the handover command from the source access network device, and initiates random access to the target access network device according to the handover command.

307: If the terminal device successfully accesses the target access network device, the terminal device sends a handover complete message to the target access network device.

As described above, the handover procedure includes a large amount of signaling. In a high-density deployment network scenario like 5G/ beyond 5G (beyond 5G, B5G)/6G, because there are a large quantity of access network devices and density is high, movement of a user causes a frequent handover procedure. If the terminal device is handed over for a plurality of times, it causes problems such as a handover failure rate increase, a service interruption risk increase, a signaling overhead increase, and a bandwidth waste. Consequently, communication experience of the terminal device is poor.

To resolve the problem of frequent handover in the process of user movement in a high-density network, a concept of cluster (cluster) is proposed, where one cluster includes a plurality of access network devices. By designing a proper cluster, all access network devices in the cluster jointly serve the terminal device, so that a quantity of user handovers can be reduced, and experience of the terminal device can be improved by using a coordinated service of all the access network devices in the cluster.

Embodiments of this application provide a communication method, to reduce a quantity of handovers of a terminal device, so that communication experience of the terminal device is improved. FIG. 4 is a diagram of a relationship between a controller, an access network device, and a terminal device according to an embodiment of this application. In FIG. 4, (a) is a diagram in which a same controller (a first controller) has communication connections (for example, wired connections) to access network devices included in a source cluster and a candidate cluster. In FIG. 4, (b) is a diagram in which a first controller has a communication connection to an access network device included in a source cluster and a second controller has a communication connection to an access network device included in a candidate cluster. A cluster currently accessed by the terminal device is referred to as a source cluster, a cluster to be accessed by the terminal device through handover is referred to as a candidate cluster, and an access network device included in the candidate cluster may be referred to as a candidate access network device.

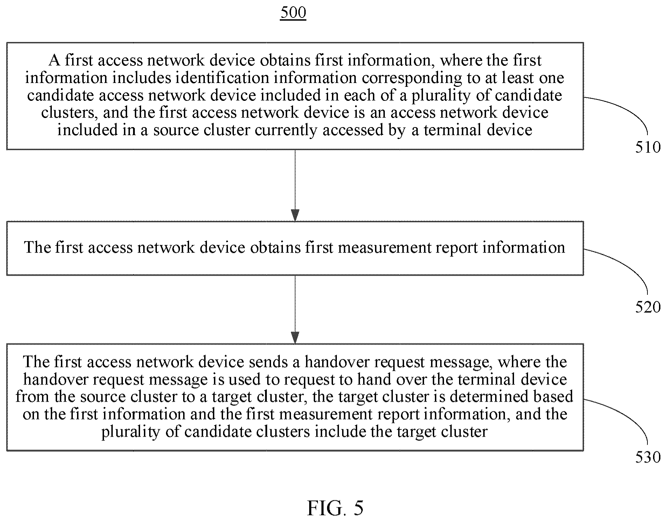

FIG. 5 is a schematic flowchart of a communication method 500 according to an embodiment of this application. A first communication apparatus may be a first access network device, or a chip or a chip system in the first access network device. A second communication apparatus may be a terminal device, or a chip or a chip system in the terminal device. A third communication apparatus may be a first controller, or a chip or a chip system in the first controller. A fourth communication apparatus may be a second access network device, or a chip or a chip system in the second access network device. A fifth communication apparatus may be a second controller, or a chip or a chip system in the second controller. A candidate access network apparatus may be a candidate access network device, or a chip, a chip system, or the like in the candidate access network device.

An example in which the first communication apparatus is a first access network device, the second communication apparatus is a terminal device, the third communication apparatus is a first controller, the fourth communication apparatus is a second access network device, and the fifth communication apparatus is a second controller is used to describe the communication method in this embodiment of this application. The first access network device and the second access network device may be base stations. The first access network device may be understood as a head base station of a source cluster, and the second access network device may be understood as a head base station of a target cluster.

510: The first access network device obtains first information, where the first information includes identification information corresponding to at least one candidate access network device included in each of a plurality of candidate clusters, and the first access network device is an access network device included in a source cluster currently accessed by the terminal device.

In a possible implementation, the first information may be list information of the plurality of candidate clusters.

The candidate access network device is an access network device outside a source cluster whose distance from the terminal device is less than or equal to a fourth threshold, and the source cluster includes one or more access network devices. The fourth threshold may be predefined.

In a possible implementation, the identification information corresponding to the candidate access network device includes a physical cell identifier (physical cell identifier, PCI), a cell radio network temporary identifier (cell radio network temporary identifier, CRNTI), a new radio cell identifier (NR cell identifier, NCI), or another newly defined identifier of the candidate access network device.

Optionally, the first controller determines the first information. The first controller sends the first information to the first access network device. Correspondingly, the first access network device receives the first information from the first controller. The first controller may be a network element in a radio access network (radio access network, RAN), or may be a network element in a core network.

For example, the first controller collects channel quality information of different candidate access network devices, and the first controller determines the first information/the plurality of candidate clusters based on channel quality information of a plurality of candidate access network devices.

The first controller may quickly evaluate performance of different clustering combinations of the plurality of candidate access network devices, and determine a clustering combination with good performance as a candidate cluster. Performance of both a source cluster and a candidate cluster satisfies a specific condition. For example, the candidate cluster satisfies at least one of the following: average frequency efficiency of at least one candidate access network device included in the candidate cluster is greater than or equal to a first threshold; an average throughput of the at least one candidate access network device included in the candidate cluster is greater than or equal to a second threshold; or an average communication rate of the at least one candidate access network device included in the candidate cluster is greater than or equal to a third threshold. The first threshold, the second threshold, and the third threshold may be determined by the first controller or predefined. Performance of the candidate cluster satisfies a specific condition, so that communication experience of a terminal device that accesses the candidate cluster can be improved.

For example, the source cluster satisfies at least one of the following: channel quality of at least one access network device included in the source cluster is greater than or equal to the first threshold; a throughput of the at least one access network device included in the source cluster is greater than or equal to the second threshold; or an average communication rate of the at least one access network device included in the source cluster is greater than or equal to the third threshold. Performance of the source cluster satisfies a specific condition, so that communication experience of a terminal device that accesses the source cluster can be improved.

520: The first access network device obtains first measurement report information. The first measurement report information may be determined by the first access network device by measuring an uplink reference signal sent by the terminal device. Alternatively, the first measurement report information may be determined by the terminal device by measuring a downlink reference signal sent by the first access network device and be sent to the first access network device.

530: The first access network device sends a handover request message, where the handover request message is used to request to hand over the terminal device from the source cluster to the target cluster, the target cluster is determined by the terminal device based on the first information and the first measurement report information, and the plurality of candidate clusters include the target cluster. The target cluster includes one or more candidate access network devices.

In a possible implementation, the first access network device sends the handover request message to the second access network device, where the second access network device is a candidate access network device included in the target cluster. Correspondingly, the second access network device receives the handover request message from the first access network device. The second access network device sends a handover request acknowledgment message to the first access network device. After the first access network device receives the handover request acknowledgment message from the second access network device, the first access network device sends a handover command to the terminal device. The terminal device is handed over from the source cluster to the target cluster based on the received handover command. In this case, the first controller is wiredly connected to the access network device included in the source cluster and candidate access network devices included in the plurality of candidate clusters.

In a possible implementation, the first information further indicates identification information corresponding to a candidate access network device with a highest priority in the at least one candidate access network device included in the candidate cluster. It may be considered that channel quality information of a candidate access network device with a highest priority in the at least one candidate access network device included in each candidate cluster is the best, and a better communication service can be provided. The second access network device is a candidate access network device with a highest priority in the at least one candidate access network device included in the target cluster, and the first access network device is an access network device with a highest priority in the access network device included in the source cluster.

In a possible implementation, the first access network device sends the handover request message to the first controller. Correspondingly, the first controller receives the handover request message from the first access network device. The first controller sends a context setup request message of the terminal device to the second controller. After receiving the context setup request message of the terminal device from the first controller, the second controller sends a context setup request acknowledgment message of the terminal device to the first controller. Correspondingly, the first controller receives the context setup request acknowledgment message of the terminal device from the second controller. In this case, the first controller is wiredly connected to the access network device included in the source cluster, and the second controller is wiredly connected to the candidate access network devices included in the plurality of candidate clusters.

The first controller and the second controller may be connected through an interface. When the first controller and the second controller are network elements in the RAN, the first controller and the second controller may be connected through an Xn interface. When the first controller and the second controller are network elements in the core network, the first controller and the second controller may be connected through an Ng interface.

In the technical solution provided in this embodiment of this application, the first access network device in the source cluster currently accessed by the terminal device may obtain the identification information (the first information) corresponding to the at least one candidate access network device included in each of the plurality of candidate clusters/the list information of the plurality of candidate clusters. The first access network device determines, based on the obtained first measurement report information and the obtained first information, to hand over the terminal device from the source cluster to the target cluster. The first access network device initiates, by sending the handover request message, a handover procedure of handing over the terminal device from the source cluster to the target cluster. A plurality of access network devices in a cluster (source cluster/target cluster) may jointly serve the terminal device. The terminal device needs to be handed over only between different clusters in a movement process, and does not need to be handed over in the cluster. Therefore, a quantity of handovers of the terminal device can be reduced, so that communication experience of the terminal device is improved.

Based on whether channel quality of the at least one candidate access network device included in each of the plurality of candidate clusters needs to be measured before handover, a processing mode is classified into a measurement mode and a blind mode. In the measurement mode, the channel quality of the at least one candidate access network device included in each of the plurality of candidate clusters needs to be measured. In the blind mode, the channel quality of the candidate access network device included in the candidate cluster does not need to be measured. In the following, a first implementation is corresponding to the measurement mode, and a second implementation is corresponding to the blind mode.

In the first implementation, the first measurement report information indicates the channel quality of the at least one candidate access network device included in each of the plurality of candidate clusters. For example, the target cluster is a candidate cluster with best channel quality in the plurality of candidate clusters.

Optionally, the first access network device sends second information to the terminal device, where the second information includes the identification information corresponding to the at least one candidate access network device included in each of the plurality of candidate clusters. Correspondingly, the terminal device receives the second information from the first access network device. The terminal device measures, based on the second information, the channel quality of the at least one candidate access network device included in each of the plurality of candidate clusters, and the terminal device sends the first measurement report information to the first access network device. Correspondingly, the first access network device receives the first measurement report information from the terminal device.

Optionally, the first information obtained by the first access network device further includes priority information of the plurality of candidate clusters, and the second information sent by the first access network device to the terminal device further includes the priority information of the plurality of candidate clusters. After receiving the second information from the first access network device, the terminal device measures, based on the second information, channel quality of at least one candidate access network device included in each of one or more candidate clusters whose priority is higher than a fifth threshold, and the first measurement report information sent by the terminal device to the first access network device indicates the channel quality of the at least one candidate access network device included in each of the one or more candidate clusters whose priority is higher than the fifth threshold. The fifth threshold may be predefined, or may be determined by the terminal device.

Optionally, before the first access network device receives the first information from the first controller, the first access network device obtains second measurement report information, where the second measurement report information indicates channel quality of the access network device included in the source cluster. The first access network device sends a first request message to the first controller based on the second measurement report information, where the first request message is used to obtain the first information. Correspondingly, the first controller receives the first request message from the first access network device; and the first controller determines the first information based on the first request message, and sends the first information to the first access network device. The second measurement report information may be determined by the first access network device by measuring the uplink reference signal sent by the terminal device. Alternatively, the second measurement report information may be determined by the terminal device by measuring the downlink reference signal sent by the first access network device and be sent to the first access network device.

Optionally, after the first controller receives the first request message from the first controller, the first controller sends a second request message to the second controller, where the second request message is used to obtain the channel quality information of the plurality of candidate access network devices. Correspondingly, the second controller receives the second request message from the first controller. The second controller sends the channel quality information of the plurality of candidate access network devices to the first controller. Correspondingly, the first controller receives the channel quality information of the plurality of candidate access network devices from the second controller. In this case, the first controller is connected to the access network device included in the source cluster, and the second controller is connected to the candidate access network devices included in the plurality of candidate clusters.

It should be understood that, when the first controller is connected to the access network device included in the source cluster and the candidate access network devices included in the plurality of candidate clusters, the first controller does not need to send, to the second controller, the second request message used to obtain the channel quality information of the plurality of candidate access network devices, and the first controller may independently determine the channel quality information of the plurality of candidate access network devices.

Optionally, before the first access network device sends the first request message to the first controller, the terminal device sends the second measurement report information to the first access network device, where the second measurement report information indicates the channel quality of the access network device included in the source cluster. Correspondingly, the first access network device receives the second measurement report information from the terminal device, and the first access network device determines, based on the second measurement report information, that the handover is needed.

In the first implementation, the first access network device in the source cluster currently accessed by the terminal device may obtain the identification information (the first information) corresponding to the at least one candidate access network device included in each of the plurality of candidate clusters/the list information of the plurality of candidate clusters. The first access network device obtains the first measurement report information based on the first information, where the first measurement report information indicates the channel quality of the at least one candidate access network device included in each of the plurality of candidate clusters. The first access network device determines, based on the first measurement report information, to hand over the terminal device from the source cluster to the target cluster, and initiates, by sending the handover request message, a handover procedure of handing over the terminal device from the source cluster to the target cluster. A plurality of access network devices in a cluster (source cluster/target cluster) may jointly serve the terminal device. The terminal device needs to be handed over only between different clusters in a movement process. Therefore, a quantity of handovers of the terminal device can be reduced, so that communication experience of the terminal device is improved.

In this implementation, the first access network device needs to obtain, based on the identification information corresponding to the at least one candidate access network device included in each of the plurality of candidate clusters included in the first information, the channel quality of the at least one candidate access network device included in each of the plurality of candidate clusters; and the first access network device determines the target cluster from the plurality of candidate clusters based on the channel quality of the at least one candidate access network device included in each of the plurality of candidate clusters.

In the second implementation, the first information further includes priority information of the plurality of candidate clusters, the target cluster is a candidate cluster whose priority is greater than or equal to a preset threshold in the plurality of candidate clusters. The first measurement report information indicates channel quality of the access network device included in the source cluster. A candidate cluster with a higher priority has better performance. For example, the target cluster is a candidate cluster with a highest priority in the plurality of candidate clusters.

For example, the first access network device determines, based on the channel quality of the access network device included in the source cluster that is indicated by the first measurement report information, that the handover is needed; and the first access network device determines the target cluster from the plurality of candidate clusters based on the priority information of the plurality of candidate clusters included in the first information. If a priority of the determined target cluster is greater than or equal to the preset threshold, it indicates that performance of the target cluster is good, so that communication experience of a terminal device that accesses the target cluster can be improved.

In the second implementation, the first access network device in the source cluster currently accessed by the terminal device may obtain the identification information (the first information) corresponding to the at least one candidate access network device included in each of the plurality of candidate clusters/the list information of the plurality of candidate clusters. The plurality of access network devices in the source cluster jointly serve the terminal device. When the terminal device is about to move out of the source cluster, the channel quality of the access network device included in the source cluster deteriorates. The terminal device may send the first measurement report information to the first access network device, where the first measurement report information indicates the channel quality of the access network device included in the source cluster. The first access network device determines, based on the first information and the first measurement report information, to hand over the terminal device from the source cluster to the target cluster, and initiates, by sending the handover request message, a handover procedure of handing over the terminal device from the source cluster to the target cluster. A plurality of access network devices in a cluster (source cluster/target cluster) may jointly serve the terminal device. The terminal device needs to be handed over only between different clusters in a movement process. Therefore, a quantity of handovers of the terminal device can be reduced, so that communication experience of the terminal device is improved.

In this implementation, the first access network device does not need to obtain the channel quality of the at least one candidate access network device included in each of the plurality of candidate clusters, only needs to obtain the channel quality of the access network device included in the source cluster, and determines, based on the channel quality of the access network device included in the source cluster and the first information, to hand over the terminal device from the source cluster to the target cluster.

Optionally, after the first controller determines the first information, the first controller does not send the first information to the first access network device. The first access network device sends the obtained first measurement report information to the first controller, and the first controller makes, based on the first information and the first measurement report information, a handover decision to hand over the terminal device from the source cluster to the target cluster.

When the first controller is connected to the access network device included in the source cluster and the candidate access network devices included in the plurality of candidate clusters, after the first controller makes the handover decision to hand over the terminal device from the source cluster to the target cluster, the first controller may notify the first access network device included in the source cluster to initiate a handover request to the second access network device included in the target cluster; or the first controller may notify the second access network device to hand over the terminal device from the source cluster to the target cluster, and the first controller initiates a handover request. For example, after the first controller makes the handover decision to hand over the terminal device from the source cluster to the target cluster, the first controller sends a handover request message to the second access network device. The second access network device receives the handover request message from the second controller, and allows the terminal device to be handed over from the source cluster to the target cluster. The second access network device sends a handover request acknowledgment message to the second access network device. Correspondingly, the first controller receives the handover request acknowledgment message from the second access network device. The second access network device sends a handover command to the terminal device.

When the first controller is connected to the access network device included in the source cluster, and the second controller is connected to the candidate access network devices included in the plurality of candidate clusters, after the first controller makes the handover decision to hand over the terminal device from the source cluster to the target cluster, the first controller sends a handover notification message to the second controller; and after the second controller receives the handover notification message from the first controller, the second controller sends a handover request message to the second access network device. After the second access network device receives the handover request message from the second controller, the second access network device sends a handover request acknowledgment message to the second controller. After receiving the handover request acknowledgment message, the second controller sends a handover notification acknowledgment message to the first controller. After the first controller receives the handover notification acknowledgment message from the second controller, the first controller sends a handover command to the first access network device. After receiving the handover command from the first controller, the first access network device sends a handover command to the terminal device.

For ease of understanding, the following describes the communication method provided in embodiments of this application with reference to specific examples.

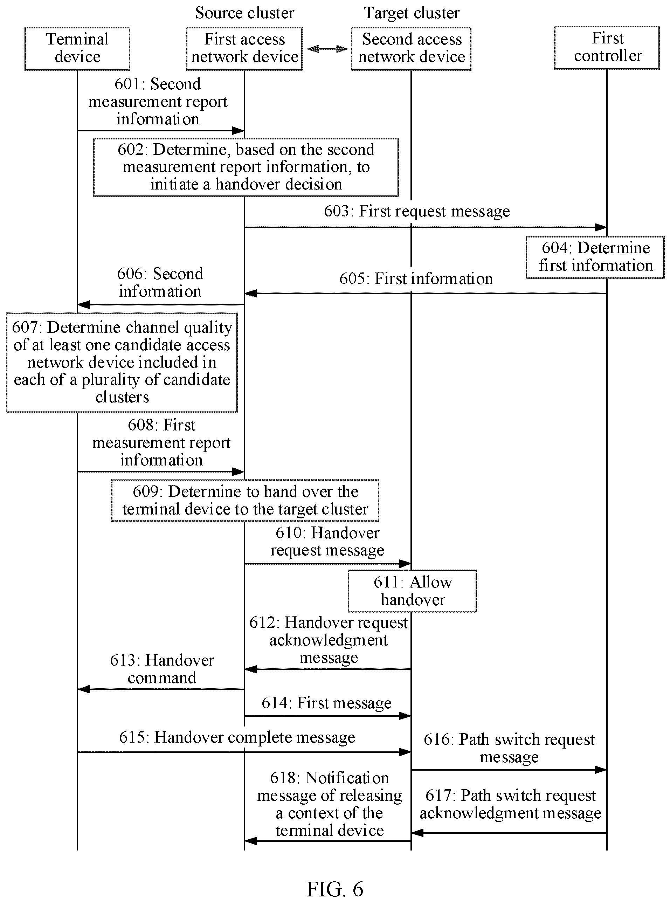

FIG. 6 is a schematic flowchart of interaction of a communication method according to an embodiment of this application. In this example, a first access network device needs to obtain channel quality of at least one candidate access network device included in each of a plurality of candidate clusters, which may be understood as the foregoing measurement mode. In addition, a first controller is wiredly connected to an access network device included in a source cluster and candidate access network devices included in the plurality of candidate clusters, and the first controller may directly communicate with the access network device included in the source cluster and the candidate access network devices included in the plurality of candidate clusters. A specific process is as follows.

601: A terminal device sends second measurement report information to the first access network device, where the second measurement report information indicates channel quality of the access network device included in the source cluster. The first access network device is an access network device included in the source cluster currently accessed by the terminal device.

602: The first access network device receives the second measurement report information from the terminal device. The first access network device determines, based on the second measurement report information, to initiate a handover decision. For example, when the first access network device determines, based on the second measurement report information, that the channel quality of the access network device included in the source cluster is lower than a specific threshold, the first access network device determines to initiate the handover decision.

603: The first access network device sends a first request message to the first controller, where the first request message is used to obtain first information, and the first information includes identification information corresponding to the at least one candidate access network device included in each of the plurality of candidate clusters. In a possible implementation, the first request message is used to obtain list information of the plurality of candidate clusters.

604: The first controller receives the first request message from the first access network device, and determines the first information. For example, the first controller determines the first information based on channel quality information of a plurality of candidate access network devices. In a possible implementation, the first controller determines the plurality of candidate clusters based on the channel quality information of the plurality of candidate access network devices.

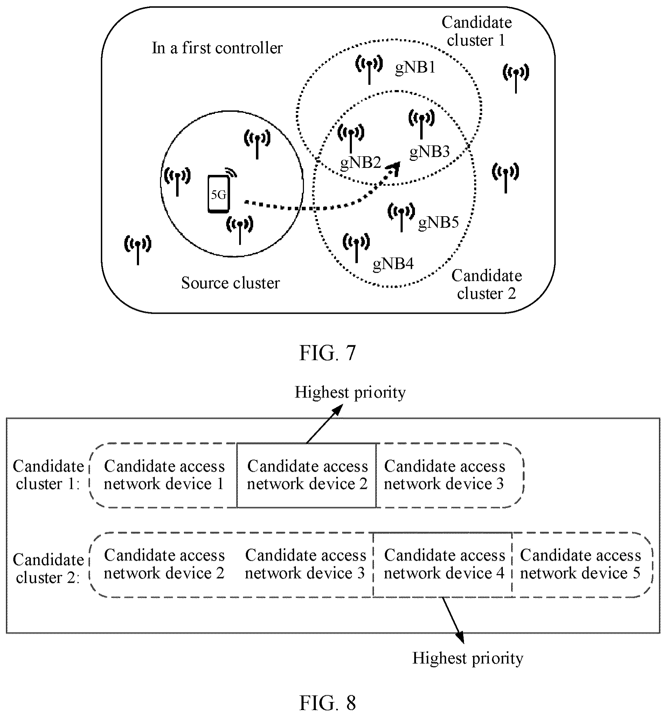

For example, FIG. 7 is a diagram of a movement scenario of the terminal device based on candidate clusters in a same controller, and FIG. 8 is a diagram of a plurality of candidate clusters determined by the first controller. Performance of both a source cluster and the candidate clusters satisfies a specific condition.

605: The first controller sends the first information to the first access network device.

606: The first access network device receives the first information from the first controller, and sends second information to the terminal device, where the second information includes the identification information corresponding to the at least one candidate access network device included in each of the plurality of candidate clusters.

607: The terminal device receives the second information from the first access network device, and the terminal device determines, based on the second information by measuring a downlink reference signal, the channel quality of the at least one candidate access network device included in each of the plurality of candidate clusters.

608: The terminal device sends first measurement report information to the first access network device, where the first measurement report information indicates the channel quality of the at least one candidate access network device included in each of the plurality of candidate clusters.

609: The first access network device receives the first measurement report information from the terminal device, and the first access network device determines, based on the first measurement report information, to hand over the terminal device from the source cluster to a target cluster. The plurality of candidate clusters include the target cluster.

For example, the first access network device selects, from the plurality of candidate clusters based on the first measurement report information, a candidate cluster that includes at least one candidate access network device and that has highest average channel quality as the target cluster, and determines to hand over the terminal device from the source cluster to the target cluster.

610: The first access network device sends a handover request message to a second access network device, where the handover request message includes identification information corresponding to at least one candidate access network device included in the target cluster, and the handover request message is used to request to hand over the terminal device from the source cluster to the target cluster. The second access network device is a candidate access network device included in the target cluster. In a possible implementation, because the first controller is connected to the access network device included in the source cluster and the candidate access network devices included in the plurality of candidate clusters, the first access network device is connected to the second access network device through an Xn interface.

For example, the first information further indicates identification information corresponding to a candidate access network device with a highest priority in the at least one candidate access network device included in the candidate cluster. The second access network device may be a candidate access network device with a highest priority in the candidate access network device included in the target cluster.

611: The second access network device receives the handover request message from the first access network device, and allows the terminal device to be handed over from the source cluster to the target cluster. For example, after receiving the handover request message from the first access network device, if determining that the candidate access network device included in the target cluster has light load and has an available time-frequency resource, the second access network device allows the terminal device to be handed over from the source cluster to the target cluster.

612: The second access network device sends a handover request acknowledgment message to the first access network device, where the handover request acknowledgment message indicates that the terminal device is allowed to be handed over from the source cluster to the target cluster, and the handover request acknowledgment message includes identification information of the terminal device allocated by the second access network device to the terminal device, for example, a C-RNTI.

Optionally, after the second access network device receives the handover request message from the first access network device, if the terminal device is not allowed to access the target cluster, the second access network device sends a handover preparation failure message to the first access network device. The handover preparation failure message indicates that the terminal device is not allowed to be handed over from the source cluster to the target cluster.

613: After the first access network device receives the handover request acknowledgment message from the second access network device, the first access network device sends a handover command to the terminal device, where the handover command includes the identification information of the terminal device allocated by the second access network device to the terminal device, for example, the C-RNTI.

614: The first access network device sends a first message to the second access network device, where the first message notifies the second access network device which data packets are received and which data packets are not received. For example, the first message notifies the second access network device which packet data convergence protocol (packet data convergence protocol, PDCP) service data unit (service data unit, SDU) data packets are received and which packet data convergence protocol service data unit data packets are not received. For example, the first message is a sequence number (sequence number, SN) state transition message.

615: After receiving the handover command from the first access network device, the terminal device attempts to establish a connection to the second access network device. If the terminal device is successfully connected to the second access network device, the terminal device sends a handover complete (handover complete) message to the second access network device, and disconnects from the first access network device. Correspondingly, the second access network device receives the handover complete message from the terminal device. Step 615 may be performed before step 614, or step 615 and step 614 may be performed simultaneously. This is not limited herein.

616: The second access network device sends a path switch request message to the first controller, where the path switch request message is used to request to change a forwarding address of downlink data, so that a core network subsequently sends downlink data of the terminal device to the second access network device instead of the first access network device.

617: After receiving the path switch request message, the first controller notifies a related network element (for example, a user plane function (user plane function, UPF) or another core network element) to perform a path switch. If the path switch succeeds, the first controller returns a path switch request acknowledgment message to the second access network device.

618: The second access network device sends, to the first access network device, a notification message of releasing a context (context) of the terminal device, so that the first access network device releases the context of the terminal device. For example, the first controller may be an access and mobility management function (access and mobility management function, AMF).

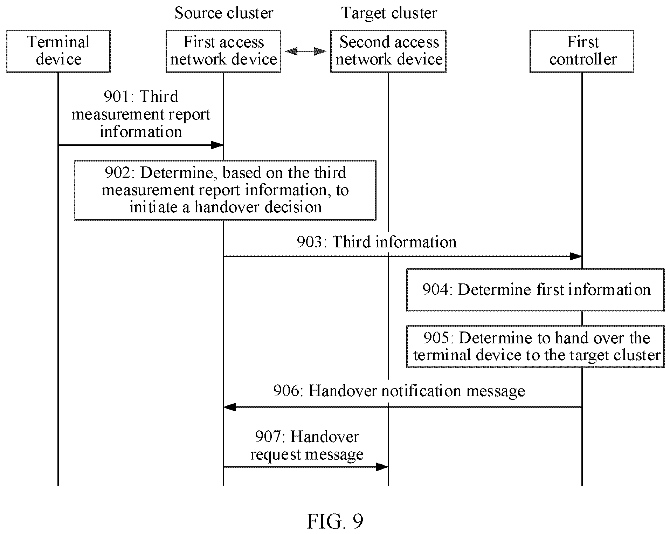

FIG. 9 is another schematic flowchart of interaction of a communication method according to an embodiment of this application. In this example, a first access network device needs to obtain channel quality of at least one candidate access network device included in each of a plurality of candidate clusters, which may be understood as the foregoing measurement mode. In addition, a first controller is wiredly connected to an access network device included in a source cluster and candidate access network devices included in the plurality of candidate clusters, and the first controller may directly communicate with the access network device included in the source cluster and the candidate access network devices included in the plurality of candidate clusters. A specific process is as follows.

901: A terminal device sends third measurement report information to the first access network device, where the third measurement report information indicates channel quality of the access network device included in the source cluster and channel quality of access network devices corresponding to a plurality of neighboring cells, the neighboring cells include a cell neighboring to a cell currently accessed by the terminal device, and the first access network device is an access network device included in a source cluster currently accessed by the terminal device.

902: The first access network device receives the third measurement report information from the terminal device. The first access network device determines, based on the third measurement report information, to initiate a handover decision. For example, when the first access network device determines, based on the third measurement report information, that the channel quality of the access network device included in the source cluster is lower than a specific threshold, the first access network device determines to initiate the handover decision.

903: The first access network device sends third information to the first controller, where the third information indicates the channel quality of the access network devices corresponding to the plurality of neighboring cells, and indicates the first controller to make a handover decision. Correspondingly, the first controller receives the third information from the first access network device.

904: The first controller receives the third information from the first access network device, and determines first information, where the first information includes identification information corresponding to the at least one candidate access network device included in each of the plurality of candidate clusters, and the access network devices corresponding to the plurality of neighboring cells include a plurality of candidate access network devices. For example, the first controller determines the first information based on channel quality information of the plurality of candidate access network devices.

905: The first controller determines, based on the first information, to hand over the terminal device from the source cluster to a target cluster, where the plurality of candidate clusters include the target cluster. For example, the first controller selects, from the plurality of candidate clusters, a candidate cluster whose at least one included candidate access network device has highest average channel quality as the target cluster, and determines to hand over the terminal device from the source cluster to the target cluster.

906: The first controller sends a handover notification message to the first access network device, where the handover notification message notifies the first access network device to initiate a handover request to a second access network device included in the target cluster, and the handover notification message includes identification information corresponding to at least one candidate access network device included in the target cluster and identification information of the second access network device.

Optionally, the first controller may notify the second access network device to hand over the terminal device from the source cluster to the target cluster, and the first controller initiates a handover request.

907: Correspondingly, the first access network device receives the handover notification message from the first controller. The first access network device sends a handover request message to the second access network device based on the handover notification message, where the handover request message includes the identification information corresponding to the at least one candidate access network device included in the target cluster, and the handover request message is used to request to hand over the terminal device from the source cluster to the target cluster. In a possible implementation, because the first controller is connected to the access network device included in the source cluster and the candidate access network devices included in the plurality of candidate clusters, the first access network device is connected to the second access network device through an Xn interface.

Subsequent steps are the same as step 611 to step 618 in FIG. 6. Refer to FIG. 6. Details are not described herein again.

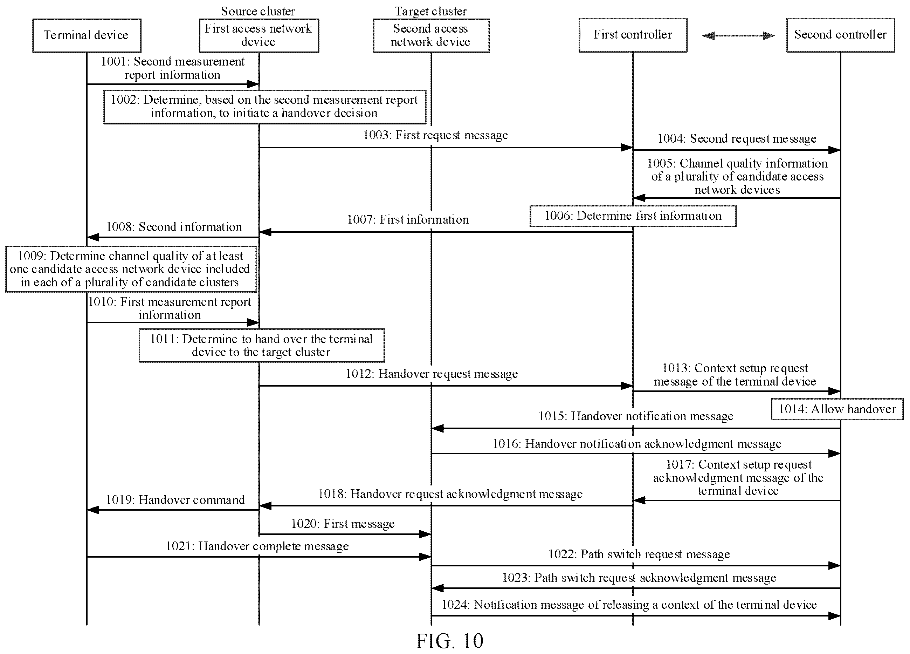

FIG. 10 is another schematic flowchart of interaction of a communication method according to an embodiment of this application. In this example, a first access network device needs to obtain channel quality of at least one candidate access network device included in each of a plurality of candidate clusters, which may be understood as the foregoing measurement mode. In addition, a first controller is wiredly connected to an access network device included in a source cluster, a second controller is wiredly connected to candidate access network devices included in the plurality of candidate clusters, the first controller may directly communicate with the access network device included in the source cluster, and the second controller may directly communicate with the candidate access network devices included in the plurality of candidate clusters. A specific process is as follows.

1001: A terminal device sends second measurement report information to the first access network device, where the second measurement report information indicates channel quality of the access network device included in the source cluster. The first access network device is an access network device included in the source cluster currently accessed by the terminal device.

1002: The first access network device receives the second measurement report information from the terminal device. The first access network device determines, based on the second measurement report information, to initiate a handover decision. For example, when the first access network device determines, based on the second measurement report information, that the channel quality of the access network device included in the source cluster is lower than a specific threshold, the first access network device determines to initiate the handover decision.

1003: The first access network device sends a first request message to the first controller, where the first request message is used to obtain first information, and the first information includes identification information corresponding to the at least one candidate access network device included in each of the plurality of candidate clusters. In a possible implementation, the first request message is used to obtain list information of the plurality of candidate clusters.

1004: The first controller receives the first request message from the first access network device. The first controller sends a second request message to the second controller based on the first request message, where the second request message is used to obtain channel quality information of a plurality of candidate access network devices.

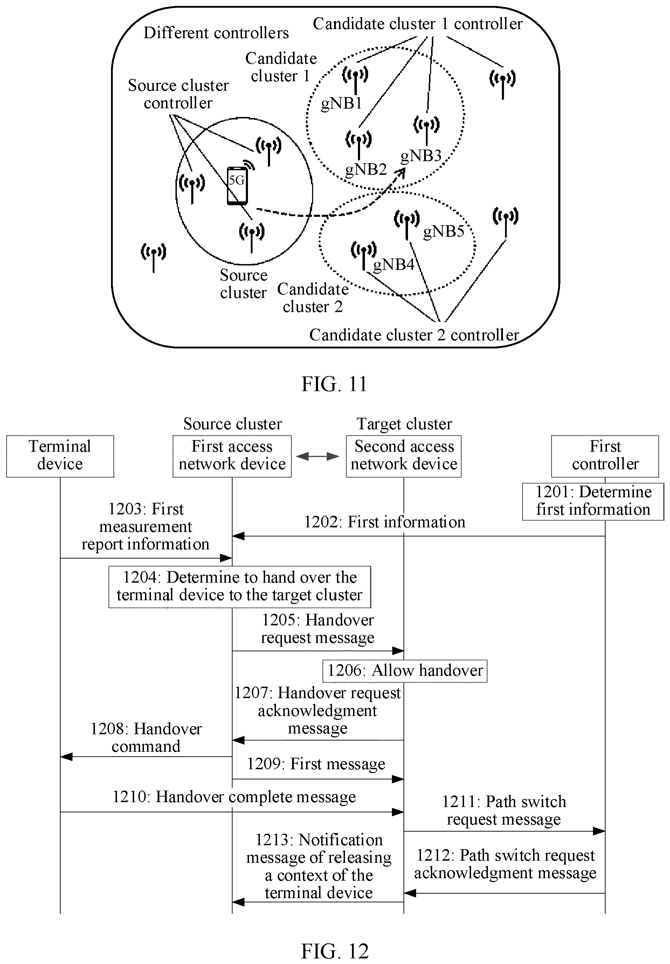

For example, FIG. 11 is a diagram of a movement scenario of the terminal device based on candidate clusters in different controllers. A source cluster controller is a first controller, and a candidate cluster 1 controller and a candidate cluster 2 controller are second controllers. Performance of both a source cluster and the candidate clusters satisfies a specific condition.

The first controller and the second controller may be connected through an interface. When the first controller and the second controller are network elements in a RAN, the first controller and the second controller may be connected through an Xn interface. When the first controller and the second controller are network elements in a core network, the first controller and the second controller may be connected through an Ng interface.

1005: After the second controller receives the second request message from the first controller, the second controller sends the channel quality information of the plurality of candidate access network devices to the first controller.

1006: The first controller receives the channel quality information of the plurality of candidate access network devices from the second controller, and the first controller determines the first information based on the channel quality information of the plurality of candidate access network devices. In a possible implementation, the first controller determines the plurality of candidate clusters based on the channel quality information of the plurality of candidate access network devices.

1007: The first controller sends the first information to the first access network device.

1008: The first access network device receives the first information from the first controller, and sends second information to the terminal device, where the second information includes the identification information corresponding to the at least one candidate access network device included in each of the plurality of candidate clusters.

1009: The terminal device receives the second information from the first access network device, and the terminal device determines, based on the second information by measuring a downlink reference signal, the channel quality of the at least one candidate access network device included in each of the plurality of candidate clusters.

1010: The terminal device sends first measurement report information to the first access network device, where the first measurement report information indicates the channel quality of the at least one candidate access network device included in each of the plurality of candidate clusters.

1011: The first access network device receives the first measurement report information from the terminal device, and the first access network device determines, based on the first measurement report information, to hand over the terminal device from the source cluster to a target cluster. The plurality of candidate clusters include the target cluster.

For example, the first access network device selects, from the plurality of candidate clusters based on the first measurement report information, a candidate cluster whose at least one included candidate access network device has highest average channel quality as the target cluster, and determines to hand over the terminal device from the source cluster to the target cluster.

1012: The first access network device sends a handover request message to the first controller, where the handover request message includes identification information corresponding to at least one candidate access network device included in the target cluster, and the handover request message is used to request to hand over the terminal device from the source cluster to the target cluster.

1013: The first controller receives the handover request message from the first access network device, and the first controller sends a context setup request message of the terminal device to the second controller, where the context setup request message of the terminal device is used to request to hand over the terminal device from the source cluster to the target cluster, and the context setup request message of the terminal device includes the identification information corresponding to the at least one candidate access network device included in the target cluster.

1014: The second controller receives the context setup request message of the terminal device from the first controller, and allows the terminal device to be handed over from the source cluster to the target cluster. For example, after receiving the context setup request message of the terminal device from the first controller, if determining that the candidate access network device included in the target cluster has light load and has an available time-frequency resource, the second controller allows the terminal device to be handed over from the source cluster to the target cluster.

1015: The second controller sends a handover notification message to a second access network device, where the handover notification message notifies the second access network device to hand over the terminal device from the source cluster to the target cluster. The second access network device is a candidate access network device included in the target cluster.

1016: After receiving the handover notification message from the second controller, the second access network device sends a handover notification acknowledgment message to the second controller, where the handover notification acknowledgment message includes a C-RNTI allocated by the second access network device to the terminal device.

1017: The second controller sends a context setup request acknowledgment message of the terminal device to the first controller. Correspondingly, the first controller receives the context setup request acknowledgment message of the terminal device from the second controller, where the context setup request acknowledgment message of the terminal device includes the C-RNTI allocated by the second access network device to the terminal device.

1018: The first controller sends a handover request acknowledgment message to the first access network device, where the handover request acknowledgment message indicates that the terminal device is allowed to be handed over from the source cluster to the target cluster, and the handover request acknowledgment message includes the C-RNTI allocated by the second access network device to the terminal device.

1019: After the first access network device receives the handover request acknowledgment message from the first controller, the first access network device sends a handover command to the terminal device, where the handover command includes the C-RNTI allocated by the second access network device to the terminal device.

1020: The first access network device sends a first message to the second access network device, where the first message notifies the second access network device which PDCP SDU data packets are received and which PDCP SDU data packets are not received. For example, the first message is an SN state transition message.

1021: After receiving the handover command from the first access network device, the terminal device attempts to establish a connection to the second access network device. If the terminal device is successfully connected to the second access network device, the terminal device sends a handover complete message to the second access network device, and disconnects from the first access network device. Step 1021 may be performed before step 1020, or step 1021 and step 1020 may be performed simultaneously. This is not limited herein.

1022: The second access network device sends a path switch request message to the second controller, where the path switch request message is used to request to change a forwarding address of downlink data, so that the core network subsequently sends downlink data of the terminal device to the second access network device instead of the first access network device.

1023: After receiving the path switch request message, the second controller notifies a user plane function or another core network element to perform a path switch. If the path switch succeeds, the second controller returns a path switch request acknowledgment message to the second access network device.

1024: The second access network device sends, to the second controller, a notification message of releasing a context of the terminal device, so that the first access network device releases the context of the terminal device. The second controller forwards, to the first controller, the notification message of releasing the context of the terminal device, and the first controller sends, to the first access network device, the notification message of releasing the context of the terminal device.

Optionally, the first controller does not send the first information to the first access network device. The first access network device sends, to the first controller, third measurement report information reported by the terminal device, and the first controller makes, based on the first information and the third measurement report information, a handover decision to hand over the terminal device from the source cluster to the target cluster.

FIG. 12 is another schematic flowchart of interaction of a communication method according to an embodiment of this application. In this example, a first access network device does not need to obtain channel quality of at least one candidate access network device included in each of a plurality of candidate clusters, which may be understood as the foregoing blind mode. In addition, a first controller is wiredly connected to an access network device included in a source cluster and candidate access network devices included in the plurality of candidate clusters, and the first controller may directly communicate with the access network device included in the source cluster and the candidate access network devices included in the plurality of candidate clusters. A specific process is as follows.

1201: The first controller determines first information, where the first information includes identification information corresponding to the at least one candidate access network device included in each of the plurality of candidate clusters, and priority information of the plurality of candidate clusters. For example, the first controller determines the first information based on channel quality information of a plurality of candidate access network devices. Performance of both a source cluster and a candidate cluster satisfies a specific condition.

1202: The first controller sends the first information to the first access network device. Correspondingly, the first access network device receives the first information from the first controller. The first access network device is an access network device included in the source cluster currently accessed by a terminal device.

1203: The terminal device sends first measurement report information to the first access network device, where the first measurement report information indicates channel quality of the access network device included in the source cluster.

1204: The first access network device receives the first measurement report information from the terminal device, and the first access network device determines, based on the first measurement report information and the first information, to hand over the terminal device from the source cluster to a target cluster. The target cluster is a candidate cluster whose priority is greater than or equal to a preset threshold in the plurality of candidate clusters. For example, the target cluster is a candidate cluster with a highest priority in the plurality of candidate clusters; or the target cluster is a candidate cluster randomly selected from the plurality of candidate clusters whose priorities are greater than or equal to the preset threshold.

1205: The first access network device sends a handover request message to a second access network device, where the handover request message includes identification information corresponding to at least one candidate access network device included in the target cluster, and the handover request message is used to request to hand over the terminal device from the source cluster to the target cluster. The second access network device is a candidate access network device included in the target cluster. In a possible implementation, because the first controller is connected to the access network device included in the source cluster and the candidate access network devices included in the plurality of candidate clusters, the first access network device is connected to the second access network device through an Xn interface.

For example, the first information further indicates identification information corresponding to a candidate access network device with a highest priority in the at least one candidate access network device included in the candidate cluster. The second access network device may be a candidate access network device with a highest priority in the candidate access network device included in the target cluster.

1206: The second access network device receives the handover request message from the first access network device, and allows the terminal device to be handed over from the source cluster to the target cluster. For example, after receiving the handover request message from the first access network device, if determining that the candidate access network device included in the target cluster has light load and has an available time-frequency resource, the second access network device allows the terminal device to be handed over from the source cluster to the target cluster.

1207: The second access network device sends a handover request acknowledgment message to the first access network device, where the handover request acknowledgment message indicates that the terminal device is allowed to be handed over from the source cluster to the target cluster, and the handover request acknowledgment message includes a C-RNTI allocated by the second access network device to the terminal device.

Optionally, after the second access network device receives the handover request message from the first access network device, if the terminal device is not allowed to access the target cluster, the second access network device sends a handover preparation failure message to the first access network device. The handover preparation failure message indicates that the terminal device is not allowed to be handed over from the source cluster to the target cluster.

1208: After the first access network device receives the handover request acknowledgment message from the second access network device, the first access network device sends a handover command to the terminal device, where the handover command includes the C-RNTI allocated by the second access network device to the terminal device.

1209: The first access network device sends a first message to the second access network device, where the first message notifies the second access network device which PDCP SDU data packets are received and which PDCP SDU data packets are not received. For example, the first message is a sequence number (sequence number, SN) state transition message.

1210: After receiving the handover command from the first access network device, the terminal device attempts to establish a connection to the second access network device. If the terminal device is successfully connected to the second access network device, the terminal device sends a handover complete message to the second access network device, and disconnects from the first access network device. Correspondingly, the second access network device receives the handover complete message from the terminal device. Step 1210 may be performed before step 1209, or step 1210 and step 1209 may be performed simultaneously. This is not limited herein.

1211: The second access network device sends a path switch request message to the first controller, where the path switch request message is used to request to change a forwarding address of downlink data, so that a core network subsequently sends downlink data of the terminal device to the second access network device instead of the first access network device.

1212: After receiving the path switch request message, the first controller notifies a user plane function or another core network element to perform a path switch. If the path switch succeeds, the first controller returns a path switch request acknowledgment message to the second access network device.

1213: The second access network device sends, to the first access network device, a notification message of releasing a context of the terminal device, so that the first access network device releases the context of the terminal device.

Optionally, the first controller does not send the first information to the first access network device. The first access network device sends third measurement report information to the first controller, and the first controller makes, based on the first information and the third measurement report information, a handover decision to hand over the terminal device from the source cluster to the target cluster. After the first controller makes the handover decision to hand over the terminal device from the source cluster to the target cluster, the first controller may notify the first access network device included in the source cluster to initiate a handover request to the second access network device included in the target cluster; or the first controller may notify the second access network device to hand over the terminal device from the source cluster to the target cluster, and the first controller initiates a handover request.

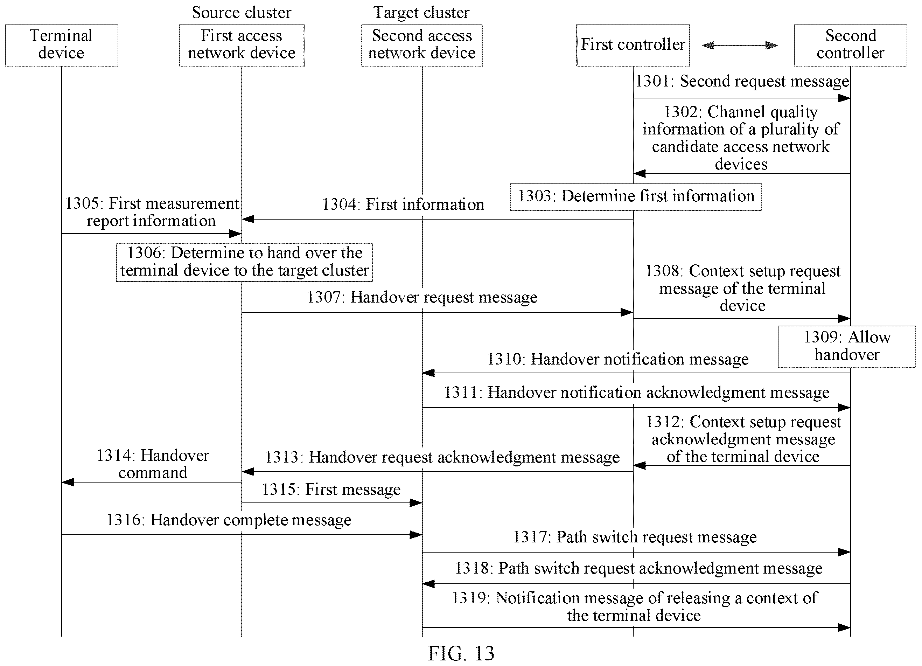

FIG. 13 is another schematic flowchart of interaction of a communication method according to an embodiment of this application. In this example, a first access network device does not need to obtain channel quality of at least one candidate access network device included in each of a plurality of candidate clusters, which may be understood as the foregoing blind mode. In addition, a first controller is wiredly connected to an access network device included in a source cluster, a second controller is wiredly connected to a candidate access network device included in the plurality of candidate clusters, the first controller may directly communicate with the access network device included in the source cluster, and the second controller may directly communicate with the candidate access network device included in the plurality of candidate clusters. A specific process is as follows.

1301: The first controller sends a second request message to the second controller, where the second request message is used to obtain channel quality information of a plurality of candidate access network devices.

The first controller and the second controller may be connected through an interface. For example, when the first controller and the second controller are network elements in a RAN, the first controller and the second controller may be connected through an Xn interface. When the first controller and the second controller are network elements in a core network, the first controller and the second controller may be connected through an Ng interface.

1302: After the second controller receives the second request message from the first controller, the second controller sends the channel quality information of the plurality of candidate access network devices to the first controller.

1303: The first controller receives the channel quality information of the plurality of candidate access network devices from the second controller, and the first controller determines first information based on the channel quality information of the plurality of candidate access network devices, where the first information includes identification information corresponding to the at least one candidate access network device included in each of the plurality of candidate clusters and priority information of the plurality of candidate clusters. Performance of both a source cluster and a candidate cluster satisfies a specific condition.

1304: The first controller sends the first information to the first access network device. Correspondingly, the first access network device receives the first information from the first controller. The first access network device is an access network device included in the source cluster currently accessed by a terminal device.

1305: The terminal device sends first measurement report information to the first access network device, where the first measurement report information indicates channel quality of the access network device included in the source cluster.

1306: The first access network device receives the first measurement report information from the terminal device, and the first access network device determines, based on the first measurement report information and the first information, to hand over the terminal device from the source cluster to a target cluster. The target cluster is a candidate cluster whose priority is greater than or equal to a preset threshold in the plurality of candidate clusters. For example, the target cluster is a candidate cluster with a highest priority in the plurality of candidate clusters; or the target cluster is a candidate cluster randomly selected from the plurality of candidate clusters whose priorities are greater than or equal to the preset threshold.

1307: The first access network device sends a handover request message to the first controller, where the handover request message includes identification information corresponding to at least one candidate access network device included in the target cluster, and the handover request message is used to request to hand over the terminal device from the source cluster to the target cluster.

1308: The first controller receives the handover request message from the first access network device, and the first controller sends a context setup request message of the terminal device to the second controller, where the context setup request message of the terminal device is used to request to hand over the terminal device from the source cluster to the target cluster, and the context setup request message of the terminal device includes the identification information corresponding to the at least one candidate access network device included in the target cluster.

1309: The second controller receives the context setup request message of the terminal device from the first controller, and allows the terminal device to be handed over from the source cluster to the target cluster. For example, after receiving the context setup request message of the terminal device from the first controller, if determining that the candidate access network device included in the target cluster has light load and has an available time-frequency resource, the second controller allows the terminal device to be handed over from the source cluster to the target cluster.

1310: The second controller sends a handover notification message to a second access network device, where the handover notification message notifies the second access network device to hand over the terminal device from the source cluster to the target cluster. The second access network device is a candidate access network device included in the target cluster.

1311: After receiving the handover notification message from the second controller, the second access network device sends a handover notification acknowledgment message to the second controller, where the handover notification acknowledgment message includes a C-RNTI allocated by the second access network device to the terminal device.

1312: The second controller sends a context setup request acknowledgment message of the terminal device to the first controller. Correspondingly, the first controller receives the context setup request acknowledgment message of the terminal device from the second controller, where the context setup request acknowledgment message of the terminal device includes the C-RNTI allocated by the second access network device to the terminal device.

1313: The first controller sends a handover request acknowledgment message to the first access network device, where the handover request acknowledgment message indicates that the terminal device is allowed to be handed over from the source cluster to the target cluster, and the handover request acknowledgment message includes the C-RNTI allocated by the second access network device to the terminal device.

1314: After the first access network device receives the handover request acknowledgment message from the first controller, the first access network device sends a handover command to the terminal device, where the handover command includes the C-RNTI allocated by the second access network device to the terminal device.

1315: The first access network device sends a first message to the second access network device, where the first message notifies the second access network device which PDCP SDU data packets are received and which PDCP SDU data packets are not received. For example, the first message is an SN state transition message.

1316: After receiving the handover command from the first access network device, the terminal device attempts to establish a connection to the second access network device. If the terminal device is successfully connected to the second access network device, the terminal device sends a handover complete message to the second access network device, and disconnects from the first access network device. Step 1216 may be performed before step 1215, or step 1216 and step 1215 may be performed simultaneously. This is not limited herein.

1317: The second access network device sends a path switch request message to the second controller, where the path switch request message is used to request to change a forwarding address of downlink data, so that the core network subsequently sends downlink data of the terminal device to the second access network device instead of the first access network device.

1318: After receiving the path switch request message, the second controller notifies a user plane function or another core network element to perform a path switch. If the path switch succeeds, the second controller returns a path switch request acknowledgment message to the second access network device.

1319: The second access network device sends, to the second controller, a notification message of releasing a context of the terminal device, so that the first access network device releases the context of the terminal device. The second controller forwards, to the first controller, the notification message of releasing the context of the terminal device, and the first controller sends, to the first access network device, the notification message of releasing the context of the terminal device.

Optionally, the first controller does not send the first information to the first access network device. The first access network device sends third measurement report information to the first controller, and the first controller makes, based on the first information and the third measurement report information, a handover decision to hand over the terminal device from the source cluster to the target cluster.

The foregoing describes the communication method provided in embodiments of this application. The following describes an execution body for performing the communication method.

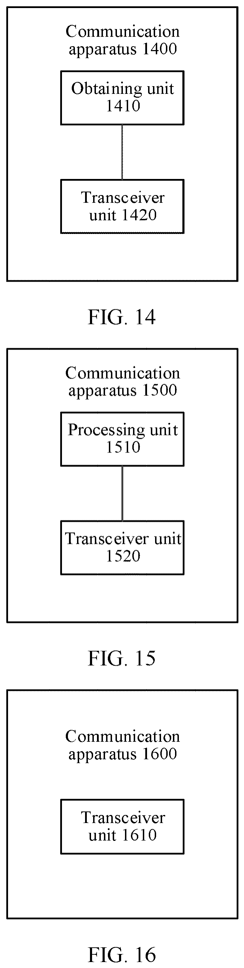

FIG. 14 is a block diagram of a communication apparatus 1400 according to an embodiment of this application. The apparatus may be used in a first communication apparatus in embodiments of this application, and the first communication apparatus may be a first access network device. The communication apparatus 1400 includes:
an obtaining unit 1410, configured to obtain first information, where the first information includes identification information corresponding to at least one candidate access network apparatus included in each of a plurality of candidate clusters, and the apparatus is an access network device included in a source cluster currently accessed by a second communication apparatus, where
the obtaining unit 1410 is further configured to obtain first measurement report information; and
a transceiver unit 1420, configured to send a handover request message, where the handover request message is used to request to hand over the second communication apparatus from the source cluster to a target cluster, the target cluster is determined based on the first information and the first measurement report information, and the plurality of candidate clusters include the target cluster.

Optionally, the obtaining unit 1410 is specifically configured to receive the first information from a third communication apparatus.

Optionally, the first measurement report information indicates channel quality of the at least one candidate access network apparatus included in each of the plurality of candidate clusters.

Optionally, the transceiver unit 1420 is further configured to send second information to the second communication apparatus, where the second information includes the identification information corresponding to the at least one candidate access network apparatus included in each of the plurality of candidate clusters.

The obtaining unit 1410 is specifically configured to receive the first measurement report information from the second communication apparatus.

Optionally, the obtaining unit 1410 is further configured to obtain second measurement report information, where the second measurement report information indicates channel quality of the access network device included in the source cluster.

The transceiver unit 1420 is further configured to send a first request message to the third communication apparatus based on the second measurement report information, where the first request message is used to obtain the first information.

Optionally, the obtaining unit 1410 is specifically configured to receive the second measurement report information from the second communication apparatus.

Optionally, the first information further includes priority information of the plurality of candidate clusters, the target cluster is a candidate cluster whose priority is greater than or equal to a preset threshold in the plurality of candidate clusters. The first measurement report information indicates the channel quality of the access network device included in the source cluster.

Optionally, the transceiver unit 1420 is specifically configured to send the handover request message to a fourth communication apparatus, where the fourth communication apparatus is a candidate access network device included in the target cluster.

Optionally, the transceiver unit 1420 is specifically configured to send the handover request message to the third communication apparatus.

Optionally, the candidate cluster satisfies at least one of the following: average frequency efficiency of the at least one candidate access network apparatus included in the candidate cluster is greater than or equal to a first threshold; an average throughput of the at least one candidate access network apparatus included in the candidate cluster is greater than or equal to a second threshold; or an average communication rate of the at least one candidate access network apparatus included in the candidate cluster is greater than or equal to a third threshold.

Optionally, the source cluster satisfies at least one of the following: channel quality of at least one access network device included in the source cluster is greater than or equal to the first threshold; a throughput of the at least one access network device included in the source cluster is greater than or equal to the second threshold; or an average communication rate of the at least one access network device included in the source cluster is greater than or equal to the third threshold.

FIG. 15 is a block diagram of another communication apparatus 1500 according to an embodiment of this application. The apparatus may be used in a third communication apparatus in embodiments of this application, and the third communication apparatus may be a first controller. The communication apparatus 1500 includes:
a processing unit 1510, configured to determine first information, where the first information includes identification information corresponding to at least one candidate access network apparatus included in each of a plurality of candidate clusters; and
a transceiver unit 1520, configured to send the first information to a first communication apparatus, where the first communication apparatus is an access network device included in a source cluster currently accessed by a second communication apparatus.

Optionally, the processing unit 1510 is specifically configured to determine the first information based on channel quality information of a plurality of candidate access network devices.

Optionally, the transceiver unit 1520 is further configured to receive a first request message from the first communication apparatus, where the first request message is used to obtain the first information.

Optionally, the first information further includes priority information of the plurality of candidate clusters.

Optionally, the transceiver unit 1520 is further configured to:
send a second request message to a fifth communication apparatus, where the second request message is used to obtain the channel quality information of the plurality of candidate access network devices; and
receive the channel quality information of the plurality of candidate access network devices from the fifth communication apparatus.

Optionally, the transceiver unit 1520 is further configured to:
receive a handover request message from the first communication apparatus, where the handover request message is used to request to handover the second communication apparatus from the source cluster to a target cluster, and the plurality of candidate clusters include the target cluster;
send a context setup request message of the second communication apparatus to the fifth communication apparatus; and
receive a context setup request acknowledgment message of the second communication apparatus from the fifth communication apparatus.

FIG. 16 is a block diagram of another communication apparatus 1600 according to an embodiment of this application. The apparatus may be used in a second communication apparatus in embodiments of this application, and the second communication apparatus may be a terminal device. The communication apparatus 1600 includes:
a transceiver unit 1610, configured to receive second information from a first communication apparatus, where the second information includes identification information corresponding to at least one candidate access network apparatus included in each of a plurality of candidate clusters, and the first communication apparatus is an access network device included in a source cluster currently accessed by the apparatus.

The transceiver unit 1610 is further configured to send first measurement report information to the first communication apparatus, where the first measurement report information indicates the channel quality of the at least one candidate access network apparatus included in each of the plurality of candidate clusters.

Optionally, the transceiver unit 1610 is further configured to send second measurement report information to the first communication apparatus, where the second measurement report information indicates channel quality of the access network device included in the source cluster.

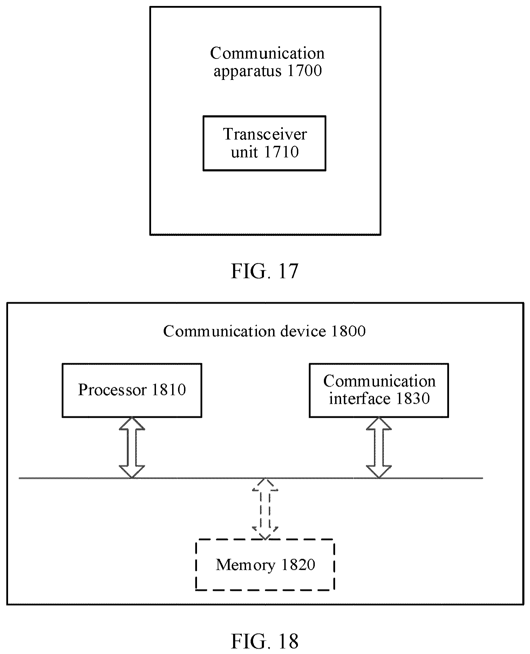

FIG. 17 is a block diagram of another communication apparatus 1700 according to an embodiment of this application. The apparatus may be used in a second communication apparatus in embodiments of this application, and the second communication apparatus may be a terminal device. The communication apparatus 1700 includes:
a transceiver unit 1710, configured to send first measurement report information to a first communication apparatus, where the first measurement report information indicates channel quality of an access network device included in a source cluster currently accessed by the apparatus, and the first communication apparatus is an access network device included in the source cluster.

Optionally, the source cluster satisfies at least one of the following:
channel quality of at least one access network device included in the source cluster is greater than or equal to a first threshold;
a throughput of the at least one access network device included in the source cluster is greater than or equal to a second threshold; or
an average communication rate of the at least one access network device included in the source cluster is greater than or equal to a third threshold.

FIG. 18 is a block diagram of a communication apparatus 1800 according to an embodiment of this application. The communication apparatus 1800 includes a processor 1810 and a communication interface 1830. In a possible implementation, the communication apparatus further includes a memory 1820.

The memory 1820 is configured to store a computer program.

The processor 1810 is coupled to the memory 1820 through the communication interface 1830. The processor 1810 is configured to invoke and run the computer program in the memory 1820, to implement the method in embodiment of this application. The communication apparatus may be used in a first device or a second device in embodiments of this application. Optionally, the processor 1810 and the memory 1820 are integrated together.

The processor 1810 may be an integrated circuit chip and has a capability of processing a signal. In an implementation process, steps in the foregoing method embodiments may be completed by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The methods, the steps, and logical block diagrams that are disclosed in embodiments of this application may be implemented or performed. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

Optionally, an embodiment of this application further provides a communication apparatus. The communication apparatus includes an input/output interface and a logic circuit. The input/output interface is configured to obtain input information and/or output information. The logic circuit is configured to perform the method according to any one of the foregoing method embodiments, and process and/or generate the output information based on the input information.

An embodiment of this application provides a communication system, including a first communication apparatus (a first access network device), a second communication apparatus (a terminal device), and a third communication apparatus (a first controller) in a communication method in embodiments of this application.

An embodiment of this application provides a communication system, including a first communication apparatus and a third communication apparatus in a communication method in embodiments of this application.

An embodiment of this application further provides a computer-readable storage medium. The computer-readable storage medium stores a computer program used to implement the method in the foregoing method embodiments. When the computer program is run on a computer, the computer is enabled to implement the method in the foregoing method embodiments.

An embodiment of this application further provides a computer program product. The computer program product includes computer program code. When the computer program code is run on a computer, the method in the foregoing method embodiments is performed.

An embodiment of this application further provides a chip, including a processor. The processor is coupled to a memory, the memory is configured to store a computer program, and the processor is configured to execute the computer program stored in the memory, to enable the chip to perform the method in the foregoing method embodiments.

It should be understood that in embodiments of this application, numbers "first", "second", and the like are merely used to distinguish between different objects, for example, to distinguish between different communication apparatuses and information, and do not constitute a limitation on the scope of embodiments of this application. Embodiments of this application are not limited thereto.

A person of ordinary skill in the art may be aware that, in combination with the examples described in embodiments disclosed in this specification, units and algorithm steps may be implemented by electronic hardware or a combination of computer software and electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working process of the foregoing systems, apparatuses, and units, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a first communication apparatus, first information, wherein the first information comprises identification information corresponding to at least one candidate access network apparatus comprised in each of a plurality of candidate clusters, and the first communication apparatus is an access network device comprised in a source cluster currently accessed by a second communication apparatus;
obtaining, by the first communication apparatus, first measurement report information; and
sending, by the first communication apparatus, a handover request message, wherein the handover request message is used to request to hand over the second communication apparatus from the source cluster to a target cluster, the target cluster is determined based on the first information and the first measurement report information, and the plurality of candidate clusters comprise the target cluster.

2. The method according to claim 1, wherein obtaining, by the first communication apparatus, the first information comprises:
receiving, by the first communication apparatus, the first information from a third communication apparatus.

3. The method according to claim 1 or 2, wherein
the first measurement report information indicates channel quality of the at least one candidate access network apparatus comprised in each of the plurality of candidate clusters.

4. The method according to claim 3, wherein
the method further comprises: sending, by the first communication apparatus, second information to the second communication apparatus, wherein the second information comprises the identification information corresponding to the at least one candidate access network apparatus comprised in each of the plurality of candidate clusters; and
obtaining, by the first communication apparatus, the first measurement report information comprises: receiving, by the first communication apparatus, the first measurement report information from the second communication apparatus.

5. The method according to any one of claims 2 to 4, wherein the method further comprises:
obtaining, by the first communication apparatus, second measurement report information, wherein the second measurement report information indicates channel quality of the access network device comprised in the source cluster; and
sending, by the first communication apparatus, a first request message to the third communication apparatus based on the second measurement report information, wherein the first request message is used to obtain the first information.

6. The method according to claim 5, wherein obtaining, by the first communication apparatus, the second measurement report information comprises:
receiving, by the first communication apparatus, the second measurement report information from the second communication apparatus.

7. The method according to claim 1 or 2, wherein
the first information further comprises priority information of the plurality of candidate clusters, and the target cluster is a candidate cluster whose priority is greater than or equal to a preset threshold in the plurality of candidate clusters; and
the first measurement report information indicates channel quality of the access network device comprised in the source cluster.

8. The method according to any one of claims 1 to 7, wherein sending, by the first communication apparatus, the handover request message comprises:
sending, by the first communication apparatus, the handover request message to a fourth communication apparatus, wherein the fourth communication apparatus is a candidate access network device comprised in the target cluster.

9. The method according to any one of claims 1 to 7, wherein sending, by the first communication apparatus, the handover request message comprises:
sending, by the first communication apparatus, the handover request message to the third communication apparatus.

10. The method according to any one of claims 1 to 9, wherein the candidate cluster satisfies at least one of the following:
average frequency efficiency of the at least one candidate access network apparatus comprised in the candidate cluster is greater than or equal to a first threshold;
an average throughput of the at least one candidate access network apparatus comprised in the candidate cluster is greater than or equal to a second threshold; or
an average communication rate of the at least one candidate access network apparatus comprised in the candidate cluster is greater than or equal to a third threshold.

11. The method according to any one of claims 1 to 10, wherein the source cluster satisfies at least one of the following:
channel quality of at least one access network device comprised in the source cluster is greater than or equal to the first threshold;
a throughput of the at least one access network device comprised in the source cluster is greater than or equal to the second threshold; or
an average communication rate of the at least one access network device comprised in the source cluster is greater than or equal to the third threshold.

12. A communication method, comprising:
determining, by a third communication apparatus, first information, wherein the first information comprises identification information corresponding to at least one candidate access network apparatus comprised in each of a plurality of candidate clusters; and
sending, by the third communication apparatus, the first information to a first communication apparatus, wherein the first communication apparatus is an access network device comprised in a source cluster currently accessed by a second communication apparatus.

13. The method according to claim 12, wherein determining, by the third communication apparatus, the first information comprises:
determining, by the third communication apparatus, the first information based on channel quality information of a plurality of candidate access network devices.

14. The method according to claim 12 or 13, wherein the method further comprises:
receiving, by the third communication apparatus, a first request message from the first communication apparatus, wherein the first request message is used to obtain the first information.

15. The method according to claim 12 or 13, wherein
the first information further comprises priority information of the plurality of candidate clusters.

16. The method according to any one of claims 12 to 15, wherein the method further comprises:
sending, by the third communication apparatus, a second request message to a fifth communication apparatus, wherein the second request message is used to obtain channel quality information of the plurality of candidate access network devices; and
receiving, by the third communication apparatus, the channel quality information of the plurality of candidate access network devices from the fifth communication apparatus.

17. The method according to claim 16, wherein the method further comprises:
receiving, by the third communication apparatus, a handover request message from the first communication apparatus, wherein the handover request message is used to request to hand over the second communication apparatus from the source cluster to a target cluster, and the plurality of candidate clusters comprise the target cluster;
sending, by the third communication apparatus, a context setup request message of the second communication apparatus to the fifth communication apparatus; and
receiving, by the third communication apparatus, a context setup request acknowledgment message of the second communication apparatus from the fifth communication apparatus.

18. A communication method, comprising:
receiving, by a second communication apparatus, second information from a first communication apparatus, wherein the second information comprises identification information corresponding to at least one candidate access network apparatus comprised in each of a plurality of candidate clusters, and the first communication apparatus is an access network device comprised in a source cluster currently accessed by the second communication apparatus; and
sending, by the second communication apparatus, first measurement report information to the first communication apparatus, wherein the first measurement report information indicates channel quality of the at least one candidate access network apparatus comprised in each of the plurality of candidate clusters.

19. The method according to claim 18, wherein the method further comprises:
sending, by the second communication apparatus, second measurement report information to the first communication apparatus, wherein the second measurement report information indicates channel quality of the access network device comprised in the source cluster.

20. A communication method, comprising:
sending, by a second communication apparatus, first measurement report information to a first communication apparatus, wherein the first measurement report information indicates channel quality of an access network device comprised in a source cluster currently accessed by the second communication apparatus, and the first communication apparatus is the access network device comprised in the source cluster.

21. The method according to claim 20, wherein the source cluster satisfies at least one of the following:
channel quality of at least one access network device comprised in the source cluster is greater than or equal to a first threshold;
a throughput of the at least one access network device comprised in the source cluster is greater than or equal to a second threshold; or
an average communication rate of the at least one access network device comprised in the source cluster is greater than or equal to a third threshold.

22. A communication apparatus, comprising:
an obtaining unit, configured to obtain first information, wherein the first information comprises identification information corresponding to at least one candidate access network apparatus comprised in each of a plurality of candidate clusters, and the apparatus is an access network device comprised in a source cluster currently accessed by a second communication apparatus, wherein
the obtaining unit is further configured to obtain first measurement report information; and
a transceiver unit, configured to send a handover request message, wherein the handover request message is used to request to hand over the second communication apparatus from the source cluster to a target cluster, the target cluster is determined based on the first information and the first measurement report information, and the plurality of candidate clusters comprise the target cluster.

23. The apparatus according to claim 22, wherein
the obtaining unit is specifically configured to receive the first information from a third communication apparatus.

24. The apparatus according to claim 22 or 23, wherein
the first measurement report information indicates channel quality of the at least one candidate access network apparatus comprised in each of the plurality of candidate clusters.

25. The apparatus according to claim 24, wherein
the transceiver unit is further configured to send second information to the second communication apparatus, wherein the second information comprises the identification information corresponding to the at least one candidate access network apparatus comprised in each of the plurality of candidate clusters; and
the obtaining unit is specifically configured to receive the first measurement report information from the second communication apparatus.

26. The apparatus according to any one of claims 23 to 25, wherein
the obtaining unit is further configured to obtain second measurement report information, wherein the second measurement report information indicates channel quality of the access network device comprised in the source cluster; and
the transceiver unit is further configured to send a first request message to the third communication apparatus based on the second measurement report information, wherein the first request message is used to obtain the first information.

27. The apparatus according to claim 26, wherein
the obtaining unit is specifically configured to receive the second measurement report information from the second communication apparatus.

28. The apparatus according to claim 22 or 23, wherein
the first information further comprises priority information of the plurality of candidate clusters, and the target cluster is a candidate cluster whose priority is greater than or equal to a preset threshold in the plurality of candidate clusters; and
the first measurement report information indicates channel quality of the access network device comprised in the source cluster.

29. The apparatus according to any one of claims 22 to 28, wherein
the transceiver unit is specifically configured to send the handover request message to a fourth communication apparatus, wherein the fourth communication apparatus is a candidate access network device comprised in the target cluster.

30. The apparatus according to any one of claims 22 to 28, wherein
the transceiver unit is specifically configured to send the handover request message to the third communication apparatus.

31. The apparatus according to any one of claims 22 to 30, wherein the candidate cluster satisfies at least one of the following:
average frequency efficiency of the at least one candidate access network apparatus comprised in the candidate cluster is greater than or equal to a first threshold; or an average throughput of the at least one candidate access network apparatus comprised in the candidate cluster is greater than or equal to a second threshold; or
an average communication rate of the at least one candidate access network apparatus comprised in the candidate cluster is greater than or equal to a third threshold.

32. The apparatus according to any one of claims 22 to 31, wherein the source cluster satisfies at least one of the following:
channel quality of at least one access network device comprised in the source cluster is greater than or equal to the first threshold;
a throughput of the at least one access network device comprised in the source cluster is greater than or equal to the second threshold; or
an average communication rate of the at least one access network device comprised in the source cluster is greater than or equal to the third threshold.

33. A communication apparatus, comprising:
a processing unit, configured to determine first information, wherein the first information comprises identification information corresponding to at least one candidate access network apparatus comprised in each of a plurality of candidate clusters; and
a transceiver unit, configured to send the first information to a first communication apparatus, wherein the first communication apparatus is an access network device comprised in a source cluster currently accessed by a second communication apparatus.

34. The apparatus according to claim 33, wherein
the processing unit is specifically configured to determine the first information based on channel quality information of a plurality of candidate access network devices.

35. The apparatus according to claim 33 or 34, wherein
the transceiver unit is further configured to receive a first request message from the first communication apparatus, wherein the first request message is used to obtain the first information.

36. The apparatus according to claim 33 or 34, wherein
the first information further comprises priority information of the plurality of candidate clusters.

37. The apparatus according to any one of claims 33 to 36, wherein the transceiver unit is further configured to:
send a second request message to a fifth communication apparatus, wherein the second request message is used to obtain the channel quality information of the plurality of candidate access network devices; and
receive the channel quality information of the plurality of candidate access network devices from the fifth communication apparatus.

38. The apparatus according to claim 37, wherein the transceiver unit is further configured to:
receive a handover request message from the first communication apparatus, wherein the handover request message is used to request to hand over the second communication apparatus from the source cluster to a target cluster, and the plurality of candidate clusters comprise the target cluster;
send a context setup request message of the second communication apparatus to the fifth communication apparatus; and
receive a context setup request acknowledgment message of the second communication apparatus from the fifth communication apparatus.

39. A communication apparatus, comprising:
a transceiver unit, configured to receive second information from a first communication apparatus, wherein the second information comprises identification information corresponding to at least one candidate access network apparatus comprised in each of a plurality of candidate clusters, and the first communication apparatus is an access network device comprised in a source cluster currently accessed by the apparatus, wherein
the transceiver unit is further configured to send first measurement report information to the first communication apparatus, wherein the first measurement report information indicates channel quality of the at least one candidate access network apparatus comprised in each of the plurality of candidate clusters.

40. The apparatus according to claim 39, wherein
the transceiver unit is further configured to send second measurement report information to the first communication apparatus, wherein the second measurement report information indicates channel quality of the access network device comprised in the source cluster.

41. A communication apparatus, comprising:
a transceiver unit, configured to send first measurement report information to a first communication apparatus, wherein the first measurement report information indicates channel quality of an access network device comprised in a source cluster currently accessed by the apparatus, and the first communication apparatus is the access network device comprised in the source cluster.

42. The apparatus according to claim 41, wherein the source cluster satisfies at least one of the following:
channel quality of at least one access network device comprised in the source cluster is greater than or equal to a first threshold;
a throughput of the at least one access network device comprised in the source cluster is greater than or equal to a second threshold; or
an average communication rate of the at least one access network device comprised in the source cluster is greater than or equal to a third threshold.

43. A communication apparatus, comprising a processor and a memory, wherein the memory is configured to store a computer program, and the processor is configured to execute the computer program stored in the memory, to enable the communication apparatus to perform the method according to any one of claims 1 to 21.

44. A communication apparatus, comprising an input/output interface and a logic circuit, wherein
the input/output interface is configured to obtain input information and/or output information; and
the logic circuit is configured to: perform the method according to any one of claims 1 to 21, and process and/or generate the output information based on the input information.

45. A communication system, comprising a first communication apparatus, a second communication apparatus, and a third communication apparatus, wherein the first communication apparatus is configured to implement the method according to any one of claims 1 to 11, the third communication apparatus is configured to implement the method according to any one of claims 12 to 17, and the second communication apparatus is configured to implement the method according to any one of claims 18 to 21.

46. A communication system, comprising a first communication apparatus and a third communication apparatus, wherein the first communication apparatus is configured to implement the method according to any one of claims 1 to 11, and the third communication apparatus is configured to implement the method according to any one of claims 12 to 17.

47. A computer-readable storage medium, wherein
the computer-readable medium stores a computer program; and
when the computer program runs on a computer, the computer is enabled to perform the method according to any one of claims 1 to 21.

48. A computer program product, comprising a computer program, wherein when the computer program is executed, the method according to any one of claims 1 to 21 is implemented.
